(19) **Europäisches Patentamt / European Patent Office / Office européen des brevets**

(11) **EP 2 743 883 B1**

(12) **EUROPEAN PATENT SPECIFICATION**

(45) Date of publication and mention
of the grant of the patent:
**06.09.2017 Bulletin 2017/36**

(21) Application number: **12824104.9**

(22) Date of filing: **25.07.2012**

(51) Int Cl.:
***H04W 4/00*** (2009.01)   ***H04W 4/02*** (2009.01)
***G05B 15/02*** (2006.01)

(86) International application number:
**PCT/JP2012/068775**

(87) International publication number:
**WO 2013/024673 (21.02.2013 Gazette 2013/08)**

(54) **INFORMATION MANAGEMENT DEVICE, NETWORK SYSTEM, INFORMATION MANAGEMENT PROGRAM, AND INFORMATION MANAGEMENT METHOD**

INFORMATIONSVERWALTUNGSVORRICHTUNG, NETZWERKSYSTEM, INFORMATIONSVERWALTUNGSPROGRAMM UND INFORMATIONSVERWALTUNGSVERFAHREN

DISPOSITIF DE GESTION D'INFORMATIONS, SYSTÈME DE RÉSEAU, PROGRAMME DE GESTION D'INFORMATIONS ET PROCÉDÉ DE GESTION D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2011   JP 2011176477**
            **13.01.2012   JP 2012005147**

(43) Date of publication of application:
**18.06.2014 Bulletin 2014/25**

(73) Proprietor: **Omron Corporation**
**Kyoto-shi, Kyoto 600-8530 (JP)**

(72) Inventors:
• **MINATO, Atsuo**
  **Kyoto-shi**
  **Kyoto 600-8530 (JP)**
• **HISANO, Atsushi**
  **Kyoto-shi**
  **Kyoto 600-8530 (JP)**

(74) Representative: **Kilian Kilian & Partner**
**Aidenbachstraße 54**
**81379 München (DE)**

(56) References cited:
**JP-A- 2002 117 184      JP-A- 2005 004 359**
**JP-A- 2005 031 955      JP-A- 2005 321 934**
**JP-A- 2006 031 723      JP-A- 2009 104 365**
**US-A1- 2007 236 497    US-A1- 2008 243 440**
**US-A1- 2010 302 042    US-B1- 6 909 921**

• **MICHAEL J OCEAN ET AL: "SNBENCH: Programming and Virtualization Framework for Distributed Multitasking Sensor Networks", 20060614; 20060614 - 20060616, 14 June 2006 (2006-06-14), pages 89-99, XP007902030, ISBN: 978-1-59593-332-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a technology for providing sensing data generated by a sensor in such a form that the sensing data can be utilized for various purposes.

Background Art

Sensors are classified into various kinds, such as sensors sensing presence and absence of an object based on change in physical quantity, sensors equipped with a function of measuring a position and a shape of an object, and sensors sensing specific gas and liquid. These sensors are, generally, used by being incorporated into a device and a system (hereinafter will be collectively referred to as "application") that perform some processing.

The same sensor may be utilized for a plurality of purposes. For example, Patent Literature 1 describes that thinning control of lighting and air-conditioning are performed by using the sensed output of a sensor for sensing a human body, the sensor being embedded into a security system, at an unmanned place at daytime when the security system is not operated.

In addition, various applications by a technology (sensor fusion) that integrates sensing data by a plurality of sensors and generates new sensing data have also been developed. For example, Patent Literature 2 describes that, by using a vibrating structure gyroscope, a velocity sensor, an acceleration sensor, a GPS sensor, etc., a position of a mobile object is calculated and the calculated position as well as a value of the certainty is output. Moreover, Patent Literature 3 describes that a camera and a wireless tag reader are introduced as sensors so as to track a mobile object by integrating positional information sensed by both the sensors.

In conventional applications utilizing sensing data, because of the premise that a sensor necessary for processing is prepared on user's own account, cost is naturally increased. Furthermore, when a target area of sensing and a type of sensing data are desired to be changed, it will be necessary to change the installed position of a sensor or to replace a sensor, which makes it difficult to achieve a desired change.

In recent years, cases in which a sensor is introduced into not only a factory but also an ordinary house, a public facility, and the like for the purpose of crime prevention and the like have been increasing. In addition, development of a communication technology makes it easier to transmit data sensed by these sensors. Moreover, general-purpose equipment having both a function of a sensor and a communication facility, such as a mobile phone and a tablet terminal, is utilized by a large number of persons.

Thus, a system in which an application acquires sensing data necessary for processing from a sensor introduced for other purposes such as crime prevention has been considered (see Patent Literature 4). For example, Patent Literature 4 proposes that to a user who uses sensing data, charging in accordance with the use of the sensing data is performed and to an owner having a sensor or equipment capable of functioning as a sensor, a consideration accompanied with a provision of sensing data is paid.

Citation List

Patent Literature

Patent Literature 1: Japanese Patent Laid-Open Publication No. H05-111077
Patent Literature 2 : Japanese Patent Laid-Open Publication No. 2011-002355
Patent Literature 3 : Japanese Patent Laid-Open Publication No. 2005-031955
Patent Literature 4 : Japanese Patent Laid-Open Publication No. 2005-321934

US 2008/243440 A1 discloses the preamble of the independent claims. Further prior art is known from Michael J. Ocean et al: "SNBENCH: Programming and Virtualization Framework for Distributed Multitasking Sensor Networks", 20060614; 20060614 - 20060616, 14 June 2006 (2006-06-14), pages 89-99, XP007902030, ISBN: 978-1-59593-332-4.

Summary of Invention

Technical Problem

In view of the above-stated problems, it is an object of the present invention to effectively utilizing sensing data by connecting a user who desires to perform some processing using the sensing data and an owner having a sensor or equipment capable of functioning as a sensor (hereinafter all will be collectively referred to as a "(sensor)", and to enable a user to easily acquire sensing data corresponding to a purpose.

The owner of a sensor may desire toplace a restriction on the use purpose, the use method, and the like of the sensing data generated by the sensor because of various reasons such as own interests. It is another object of the present invention to enable an owner of a sensor to easily place a restriction on a use purpose, a use method, and the like of sensing data.

The problem is solved by the subject-matter of the independent claims. Further advantageous embodiments are the subject-matter of the dependent claims.

Solution to Problem

In order to solve the above problems, the present invention provides an information management device equipped with the following: a provision condition storage unit, a use condition storage unit, a sensing data acquisition unit, a specification unit, and a sensing data delivery unit.

The provision condition storage unit, for each sensor, registers therein provision condition information of sensing data generated by a sensor in association with identification information of the sensor. This provision condition information includes, for example, an information type of sensing data, positional information of a sensing target area, and restriction information that indicates a use restriction of the sensing data to a use purpose of the sensing data.

The use condition storage unit, for each application that requires use of the sensing data, registers therein use condition information of the sensing data required by an application in association with an address of a transmission destination of the sensing data. This use condition information includes, for example, an information type of sensing data, positional information of a sensing target area, and use purpose information that indicates a use purpose of the sensing data.

The sensing data acquisition unit acquires through communication the sensing data generated by the sensor registered in the provision condition storage unit. The specification unit specifies the provision condition information matched with the use condition information by searching the provision condition storage unit for each piece of the use condition information registered in the use condition storage unit.

The sensing data delivery unit executes a transmission process in which, to a transmission destination address corresponding to the use condition information with which the specification unit has specified the provision condition information matched, the sensing data that the sensing data acquisition unit has acquired through communication with the sensor having the identification information in association with the provision condition information matched with the use condition information is transmitted.

In the context of the foregoing configuration, a provision condition determined with the owner of a sensor is previously registered in the provision condition storage unit and a use condition determined with an operator of an application is registered in the use condition storage unit. By these registrations, sensing data by each sensor is acquired through communication in accordance with the registered conditions and, for each application, a sensor that generates sensing data that the application requires regarding an area that the application requires is specified, which makes it possible to transmit the sensing data. Therefore, even if the operator of an application does not introduce an own sensor, it becomes possible to easily acquire sensing data necessary for processing. It also becomes possible to easily deal with change in sensing target area and in information type of sensing data.

In addition, the information management device may preferably have a configuration equipped with the following: a virtual sensor management information storage unit and data processing unit.

In the virtual sensor management information storage unit, management information including: the identification information of the sensors that are combined in order to set a virtual sensor that generates new sensing data by combining a plurality of the sensors among the sensors registered in the provision condition storage unit and integrating the sensing data by the plurality of the sensors; a definition of a process of integration; and the information type of the sensing data generated by the integration is registered.

The data processing unit may preferably acquire sensing data of the virtual sensor corresponding to the management information by integrating, based on the definition in the management information registered in the virtual sensor management information storage unit, the sensing data acquired by the sensing data acquisition unit with respect to the plurality of the sensors corresponding to the identification information in the management information registered in the virtual sensor management information storage unit.

Moreover, the specification unit may preferably specify, by searching the provision condition storage unit and the virtual sensor management information storage unit based on the use condition information registered in the use condition storage unit, a virtual sensor that generates sensing data of a type that matches the use condition information by a combination of the sensors of which the positional information of the sensing target area matches the use condition information. The sensing data delivery unit may preferably transmit the sensing data acquired by the data processing unit based on the management information of the virtual sensor specified by the specification unit to a transmission destination address corresponding to the use condition information to be specified.

According to the above configuration, since the sensing data generated by various combinations of the virtual sensors in addition to a real sensor can be provided, the variation of sensing data can be enriched. Thus, even if the sensor that a provider owns has a simple configuration, it becomes possible to provide sensing data with a high reliability degree by processing of a virtual sensor.

In addition, a use condition registered in the use condition storage unit may preferably include information indicating timing when the sensing data is acquired. In this case, the specification unit may preferably be configured to specify the provision condition information matched with the use condition information on condition that the use condition information to be processed reaches a timing when the sensing data is acquired while circulating a process in which the use condition information to be processed is changed in sequence, and the sensing data delivery unit may preferably be configured to transmit the sensing data to a transmission address corresponding to the use condition information to be specified every time a specification process by the specification unit ends, the specification process being performed with respect to a piece of the use condition information registered in the use condition storage unit.

According to such a configuration, the sensing data that a user desires can be provided at a timing desired by the user. Moreover, even if the sensing data that has been provided has not matched with the use condition, sensing data by other sensors can be provided so as to flexibly deal with the convenience of a provider, the convenience of a user, a change in environment, and so on.

Furthermore, the provision condition information registered in the provision condition storage unit may preferably be configured to include identification information of a provider of sensing data, and information indicating an amount of consideration that the provider desires to receive with respect to a provision of the sensing data. In this case, the use condition information registered in the use condition storage unit may preferably include identification information of an application that receives the provision of sensing data, and information indicating an amount of consideration that an operator of the application pays with respect to the provision of sensing data. The specification unit, on condition that the amount of consideration required by the provision condition information to be specified is less than or equal to the amount of consideration in the use condition information, may preferably be configured to specify the provision condition information matched with the use condition information.

The information management device may also preferably include a consideration calculation unit that calculates, based on: the specification process by the specification unit; and the provision condition information and the use condition information that correspond to the sensing data used for transmission by the sensing data delivery unit, the use condition information corresponding to the transmission destination address, both information, an amount of consideration that the operator of the application pays with respect to the provision of the sensing data and an amount of consideration that an owner of the sensor that has generated the sensing data that is used for the transmission receives.

According to this configuration, the operator of an application can receive a provision of sensing data for a consideration that the operator desires, and the owner of a sensor can receive the consideration that the owner desires by the provision of sensing data.

In addition, by including the above restriction information in the provision condition information and including use purpose information in the use condition information, the owner of a sensor can restrict the sensing data that the owner provides from being transmitted to an information use device that utilizes sensing data for a use purpose in the use restriction placed on this sensing data. In other words, the owner of a sensor can permit the providing sensing data to be utilized only with regard to a use purpose for which use is permitted. Accordingly, a provision of sensing data from an owner of a sensor can be promoted and the sensing data can be effectively exploited.

In addition, the information management device may preferably have a configuration equipped with: a management information generation unit that generates, for each of the applications, by using the provision condition information registered in the provision condition storage unit and the use condition information registered in the use condition storage unit, management information obtained by associating the use purpose information indicating the use purpose of the sensing data that the application requires with the sensing data of which use is not restricted against the use purpose; a management information storage unit that stores the management information generated by the management information generation unit; and an information selection unit that, when receiving a use request of sensing data from any of the applications, refers to the management information stored in the management information storage unit, and selects sensing data to be transmitted to the application.

With such a configuration, when a use request of sensing data is received from an application, information to be transmitted to this application is selected with reference to the management information previously generated and stored in the management information storage unit, so that a time required for selection of the sensing data to be transmitted to the application that has transmitted the use request of sensing data can be shortened.

Moreover, a provision contract unit, when newly receiving a contract request concerning a provision of sensing data, may preferably be configured to additionally store the provision condition information concerning this contract request in the provision condition storage unit, and a use contract unit, when receiving a contract request that use of new information in the application is desired, may preferably be configured to additionally store the use condition information concerning this contract request in the use condition information storage unit.

This enables a new contract concerning the provision of sensing data and the use of the sensing data to be performed.

The management information generation unit may preferably generate management information at every predetermined timing.

Furthermore, a sensing data storage unit may preferably be configured to store the sensing data provided from the sensor and a request unit may preferably be configured to, if the sensing data that the information selection unit selects as the sensing data to be transmitted to the application is not stored in the sensing data storage unit, request a provision of sensing data with respect to a relevant sensor.

The provision condition information, for each piece of sensing data, may preferably include a use fee and a recognition degree of the sensing data, and the use condition information may preferably include a priority for the use fee and the recognition degree. In this case, the information selection unit may preferably select sensing data to be transmitted to the application according to the priority included in the use condition information. Accordingly, the level of service to a user who utilizes information can also be improved.

Advantageous Effects of Invention

According to preferred embodiments of the present invention, out of sensors positioned in various places, a sensor that can provide sensing data that an application requires can be specified and sensing data can be provided. Thus, each sensor can be utilized for not only an owner-intended purpose but also even other purposes, so that sensing data can be effectively exploited. In addition, construction and change in application become easy. Moreover, since the owner of a sensor can permit the providing sensing data to be utilized only with regard to a use purpose for which use is permitted, a provision of sensing data from an owner of a sensor can be promoted and the sensing data can be effectively exploited.

Brief Description of Drawings

Fig. 1 is a view illustrating a configuration of a network system according to a preferred embodiment of the present invention.
Fig. 2 is a view illustrating an example of a configuration of a record within a sensing data provision condition DB.
Fig. 3 is a view illustrating an example of a configuration of a record within a sensing data use condition DB.
Fig. 4 is a view illustrating another example of a configuration of a record within the sensing data use condition DB.
Fig. 5 is a view illustrating an example of a sensing data group generated by a virtual sensor set by a real sensor and a combination of real sensors.
Fig. 6A and Fig. 6B are views each illustrating an example of a configuration of management information of the virtual sensor.
Fig. 7 is a view illustrating an example of a processing mode in a virtual sensor.
Fig. 8 is a view illustrating an example of a processing mode in a virtual sensor.
Fig. 9 is a view illustrating an example of a processing mode in a virtual sensor.
Fig. 10 is a flowchart illustrating a procedure of a contract matching process.
Fig. 11 is a flowchart illustrating a procedure following the procedure in Fig. 10.
Fig. 12 is a flowchart illustrating a procedure of a sensing data delivery process.
Fig. 13 is a flowchart illustrating a procedure of a sensing data process.
Fig. 14 is a view illustrating a specific example of an application that receives a provision of sensing data.
Fig. 15 is a block diagram illustrating a schematic configuration of a network system according to another preferred embodiment of the present invention.
Fig. 16 is a block diagram illustrating a configuration of a main part of an information management device according to another preferred embodiment of the present invention.
Fig. 17 is a schematic view illustrating a configuration of a provider contract DB according to another preferred embodiment of the present invention.
Fig. 18 is a schematic view illustrating a configuration of a user contract DB according to another preferred embodiment of the present invention.
Fig. 19 is a schematic view illustrating a configuration of a management information DB according to another preferred embodiment of the present invention.
Fig. 20 is a schematic view illustrating a configuration of an information record DB according to another preferred embodiment of the present invention.

Fig. 21 is a schematic view illustrating a configuration of a use history DB according to another preferred embodiment of the present invention.

Fig. 22 is a schematic view illustrating a configuration of a recommendation degree management DB according to another preferred embodiment of the present invention.

Fig. 23 is a schematic view illustrating a configuration of an affinity degree management DB according to another preferred embodiment of the present invention.

Fig. 24 is a flowchart illustrating an operation of an information management device in a provision contract process according to another preferred embodiment of the present invention.

Fig. 25 is a flowchart illustrating an operation of an information management device in a use contract process according to another preferred embodiment of the present invention.

Fig. 26 illustrates a display example of an input screen concerning a type selection in an information use device and the like according to another preferred embodiment of the present invention.

Fig. 27 illustrates a display example of an input screen concerning a use contract of information in an information use device and the like according to another preferred embodiment of the present invention.

Fig. 28 is a flowchart illustrating an operation of an information management device in a management information DB update process according to another preferred embodiment of the present invention.

Fig. 29 is a flowchart illustrating an operation of an information management device in an information use process according to another preferred embodiment of the present invention.

Fig. 30 is a view illustrating a concept of an information use process in child watch.

Description of Embodiments

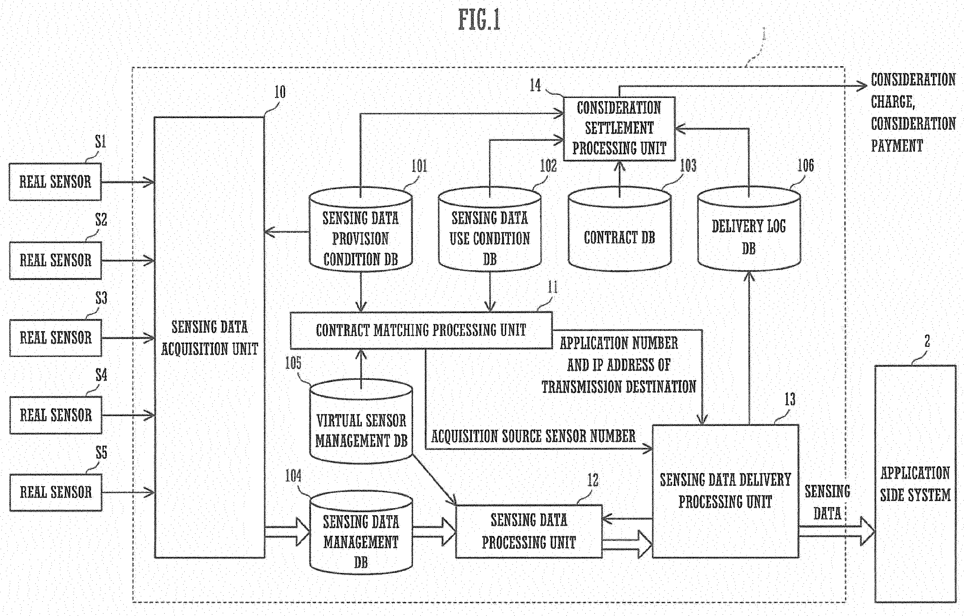

Fig. 1 is a view illustrating a configuration of a network system according to a preferred embodiment of the present invention.

This network system is equipped with an information management device 1, a device in an application side system 2, and a sensor.

The information management device 1 receives transmission of sensing data (data showing a sensed content) from a plurality of sensors and delivers, when an application requires sensing data, required sensing data to the application side system 2 that performs a process utilizing the sensing data. While in this preferred embodiment, a specific delivery destination of sensing data is set to a device in the application side system 2, the present invention is not limited to the device and can deliver common sensing data to a plurality of devices.

The sensor that transmits sensing data is general equipment that has a function of generating data showing the phenomenon of the outside of an own device. For example, not only equipment sold by a name of "a sensor" such as a photoelectric sensor, a magnetic sensor, a range sensor, and a visual sensor, but also a reader/writer for an RFID, a two dimensional code reader, a bar code reader, a digital camera, and the like can be utilized as a sensor.

Since it is necessary to transmit sensing data periodically, the sensor of this preferred embodiment is provided with a function of communication. For example, some sensors include an incorporated chip for wireless communication of a mobile phone and transmit generated sensing data to the information management device 1 through a wireless circuit network for mobile phones. Other sensors transmit sensing data to communication equipment located close by, such as a smartphone, through a short-range wireless communication facility, such as Wi-Fi (registered trademark) and ZigBee (international registration trademark), and transmit the sensing data to the information management device 1 from this communication equipment. There are also sensors that transmit sensing data by using not only wireless communication but also wired communication utilizing an optical fiber cable or the like.

Portable communication equipment itself, such as a smartphone and a mobile phone, can be used as a sensor. For example, positional information acquired by a GPS function, an image generated by a built-in camera, information read by a reading function of a two dimensional code, and the like can be transmitted as sensing data. Regarding an image, even if an image is not taken by an owner being conscious of sensing, the image of which the content matches a purpose of an application may be functioned as sensing data.

The combination of a plurality of pieces of equipment that senses various kinds of information and communication equipment may be made to function as a single sensor (communication equipment may be included in either side of the equipment), and the combination of the information sensed by each piece of equipment can also be output as sensing data. For example, with the combination of a range sensor, a reader/writer for an RFID and communication equipment, to an object with an RFID tag, sensing data including the identification information (ID) and positional information read from the RFID tag can be output.

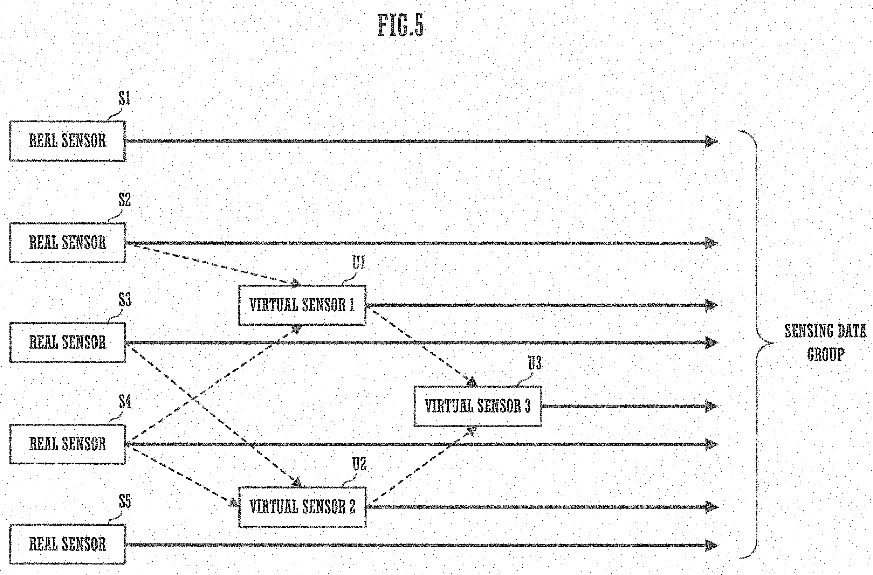

Furthermore, in this preferred embodiment, not only sensing data generated by various sensors but also sensing data generated by a virtual sensor by the combination of a plurality of sensors can be provided. Hereinafter, in order to differentiate an actual sensor from a virtual sensor, the actual sensor is called a "real sensor." In Fig. 1, and Fig. 5 to be described below, the number of real sensors is set to five for the sake of simplification and each real sensor is respectively indicated by reference signs S1 to S5.

The information management device 1 illustrated in Fig. 1 is configured by a computer or a plurality of computers and has storage means such as a sensing data provision condition DB 101 (DB is an abbreviation for "database." The same applies hereinafter), a sensing data use condition DB 102, a contract DB 103, a sensing data management DB 104, a virtual sensor management DB 105, and a delivery log DB 106. Furthermore, the information management device 1 is provided with functions, such as a sensing data acquisition unit 10, a contract matching processing unit 11, a sensing data processing unit 12, a sensing data delivery processing unit 13, and a consideration settlement processing unit 14.

The sensing data provision condition DB 101 includes a record which is set for each individual real sensor and in which various conditions regarding a provision of sensing data are registered. The sensing data use condition DB 102 includes a record which is set for each application utilizing sensing data and in which various conditions regarding sensing data utilized for the application are registered.

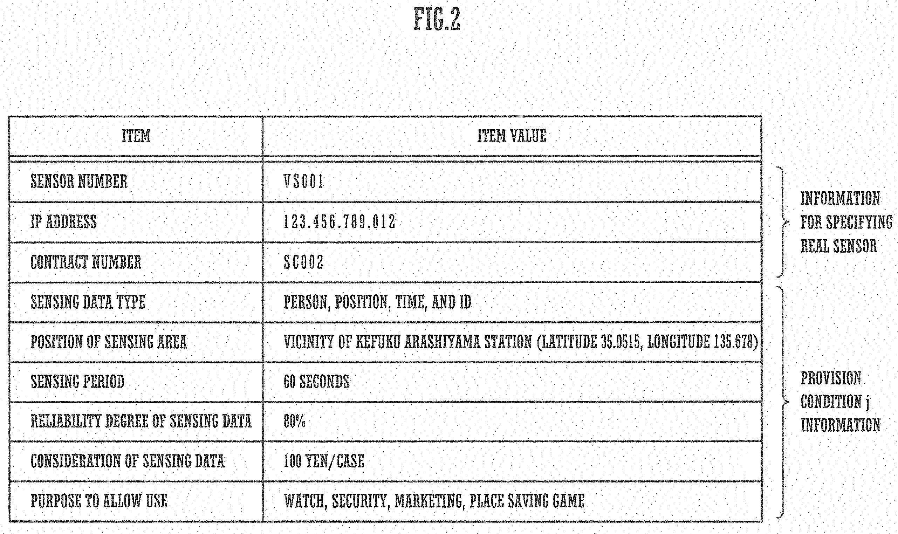

Fig. 2 illustrates an example of a configuration of a record stored in the sensing data provision condition DB 101. According to the example of Fig. 2, the sensing data provision condition DB 101 stores as information for specifying a real sensor: a code (sensor number) specific to a real sensor, an IP address of equipment that relays a real sensor or sensing data from a real sensor, a contract number of a contract document exchanged between an owner of a real sensor and a system operator, and so on. Furthermore, the sensing data provision condition DB 101 stores, as provision condition information of sensing data, information indicating: a sensing data type, positional information of a sensing area (including character information indicating a place of a sensing area, latitude, and longitude), a sensing period, a reliability degree of sensing data, an amount of consideration that an owner desires with respect to a provision of sensing data per case, and a purpose that an owner permits regarding use of sensing data.

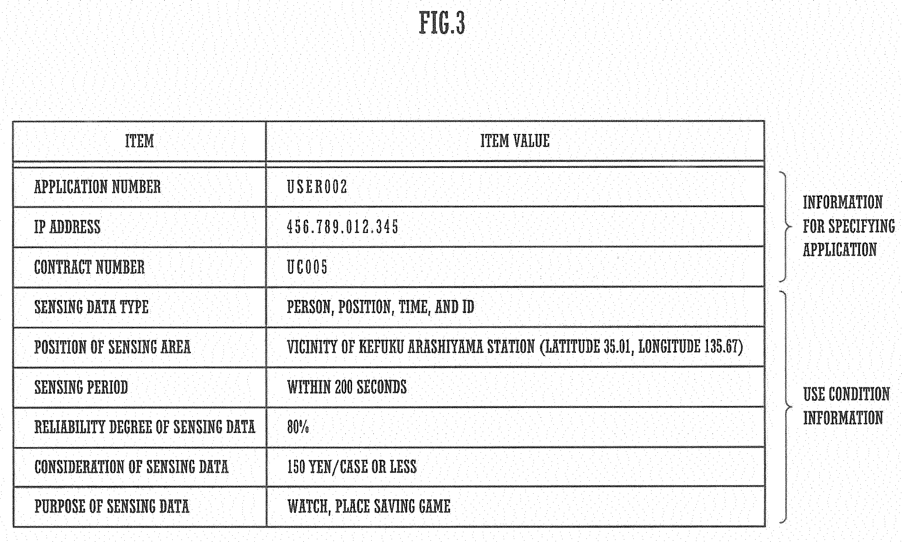

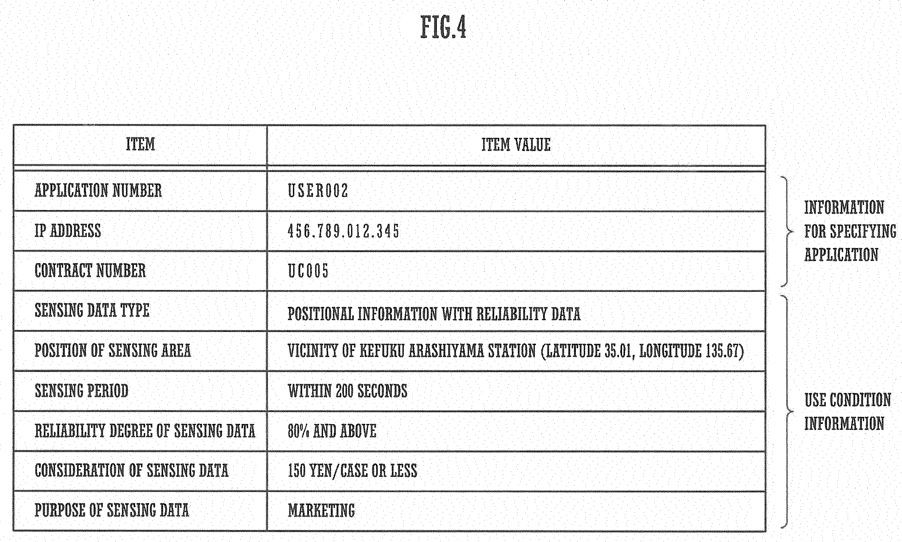

Fig. 3 and Fig. 4 each illustrate an example of a configuration of a record stored in the sensing data use condition DB 102. According to the examples of Fig. 3 and Fig. 4, the sensing data use condition DB 102 stores as information for specifying a corresponding application: a code (application number) specific to an application, an IP address of a device of a transmission destination of sensing data, a contract number (number of a contract document exchanged between a business operator and a system operator), and so on. Furthermore, the sensing data use condition DB 102 stores, as use condition information of sensing data, information indicating: a sensing data type, positional information of a sensing area, a sensing period, a reliability degree of sensing data, an amount of consideration that a user can pay with respect to a provision of sensing data per case, a purpose to utilize sensing data, and so on.

The information registered in the sensing data provision condition DB 101 and the sensing data use condition DB 102 is input by a person in charge who belongs to the business operator that operates the information management device 1 based on respective contracts with an owner of a real sensor or an operator of an application. However, the information transmitted from the owner of a real sensor or the operator of an application may be received and registered in each database 101 and 102 based on the received information.

The provision conditions can include, not only the provision conditions illustrated in Fig. 2 but also a condition for restricting a time zone when sensing data is output and a condition for determining sensed content by a sensor and selecting data to be output. Similarly, the use conditions can also include a condition for restricting a time zone when sensing data is input and a condition for designating content of data to be required. In addition, under the use conditions, a plurality of pieces of sensing data can be designated, and, in this case, sensing data of which the types are different can also be designated. More specifically, a condition for specifying a sensing data type and receiving a provision of all sensing data included in a sensing area within a range in which a consideration matches with a value of the consideration can be set as a use condition.

Fig. 5 illustrates sensing data groups that can be generated by real sensors S1 to S5 illustrated in Fig. 1. In this preferred embodiment, by combining the real sensors in several ways, the predetermined number of virtual sensors (a virtual sensor U1 and a virtual sensor U2 in the example of Fig. 5) can be set. Furthermore, like a virtual sensor U3 in Fig. 5, by combining the virtual sensors, many more virtual sensors can also be set. The virtual sensor management DB 105 stores, for each of the set virtual sensors U1, U2, and U3, management information that indicates the configuration and the processing mode of the virtual sensor.

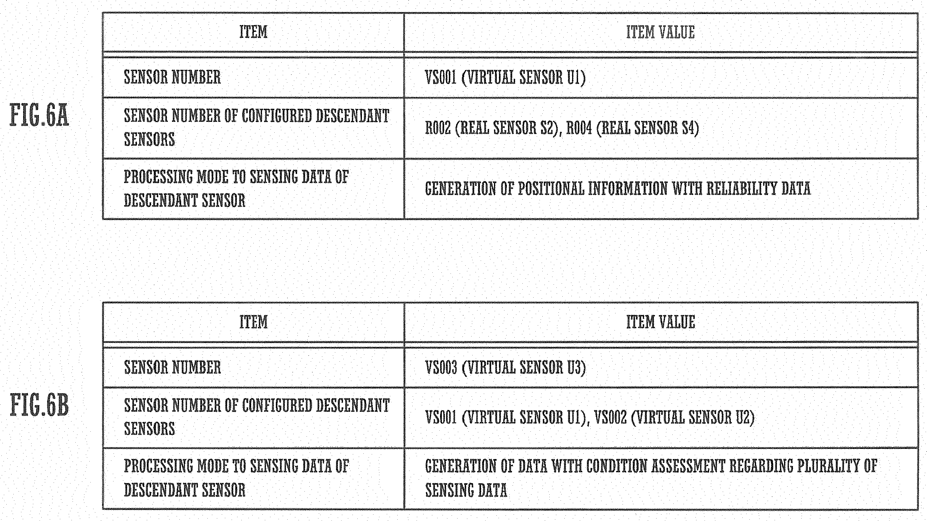

Fig. 6A shows management information of the virtual sensor U1 illustrated in Fig. 5, and Fig. 6B shows management information of the virtual sensor U3 generated by combining the virtual sensors U1 and U2. Each piece of the exemplified management information includes: a sensor number of a virtual sensor, a sensor number of a sensor (hereinafter will be referred to as "descendant sensor") that is combined to set the virtual sensor; a processing mode used for a process of integration of sensing data of the descendant sensors. The processing mode includes a data type of the sensing data generated by a process.

Reference is returned to Fig. 1 to continue description. Each of the real sensors S1 to S5 transmits sensing data in accordance with the sensing period indicated by the provision condition information. The sensing data includes a sensor number of a transmission source sensor. When receiving sensing data from each of the real sensors S1 to S5, the sensing data acquisition unit 10, using the IP address and the sensor number of the device that has transmitted the data, confirms truth or falsity of the data by referring to the sensing data provision condition DB 101, and stores the sensing data recognized as true data in the sensing data management DB 104.

The contract matching processing unit 11, for each application registered in the sensing data use condition DB 102, collates use condition information of the sensing data in the application and the provision condition information in the sensing data provision condition DB 101, and specifies the provision condition information matched with the use condition information. In this collation, the use conditions for virtual sensors are similarly collated by referring to the virtual sensor management DB. When provision condition information matched with the use condition information is specified, the contract matching processing unit 11 sets the sensor number in the provision condition information to information (hereinafter will be referred to as "a provision source sensor number") that indicates a provision source sensor of sensing data. The contract matching processing unit 11 also sets the application number and the IP address in the use condition information to be collated to an application number and an address of a transmission destination of sensing data. Then, the contract matching processing unit 11 notifies the sensing data delivery processing unit 13 of the provision source sensor number, and the application number and the address of a transmission destination.

The sensing data delivery processing unit 13 receives the above notification and transmits an acquisition request of data including a provision source sensor number to the sensing data processing unit 12. On one hand, the sensing data processing unit 12, if the provision source sensor number in a data acquisition request is the sensor number of a real sensor, reads the latest sensing data connected to the sensor number from the sensing data provision condition DB 101 and provides the sensing data to the sensing data delivery processing unit 13. On the other hand, the sensing data processing unit 12, if the provision source sensor number in the data acquisition request is a sensor number of a virtual sensor, refers to the record in the virtual sensor management DB 105 corresponding to the sensor number and specifies a descendant sensor from the information in the relevant record. Then, the sensing data processing unit 12 generates the sensing data of the virtual sensor by processing the sensing data of the descendant sensor based on the management information and provides the sensing data to the sensing data delivery processing unit 13.

The sensing data delivery processing unit 13 transmits the sensing data provided from the sensing data processing unit 12 in accordance with the data acquisition request to the IP address of a transmission destination application. Furthermore, the sensing data delivery processing unit 13 creates log information that shows the content of the above transmission and stores the log information in the delivery log DB 106.

The contract DB 103 registers therein specific content of a contract exchanged between an operator of the information management device 1 and an owner of a real sensor or an operator of an application side system 2. The registration information in this contract DB 103 can be accessed with the contract number indicated in Fig. 2 to Fig. 4.

The information registered in the contract DB 103 includes specific information regarding settlement of a consideration and payment such as a settlement date of the consideration, a notification method of a settlement result, an account number of a recipient of the consideration, and so on. The consideration settlement processing unit 14, based on the registration information, reads corresponding information from the delivery log DB 106 for each real sensor and for each application, and calculates an amount of consideration that an owner of each real sensor should receive and an amount of consideration that an application side pays. Furthermore, the consideration settlement processing unit 14, based on an agreement shown by the relevant contract information in the contract DB 103, executes processes regarding payment of a consideration to an owner of a sensor and charge of a consideration to an operator of an application. It is to be noted, although not illustrated in Fig. 1, with respect to the log information regarding to a virtual sensor, the consideration settlement processing unit 14 also refers to the virtual sensor management DB 105 to perform a calculation process of a consideration.

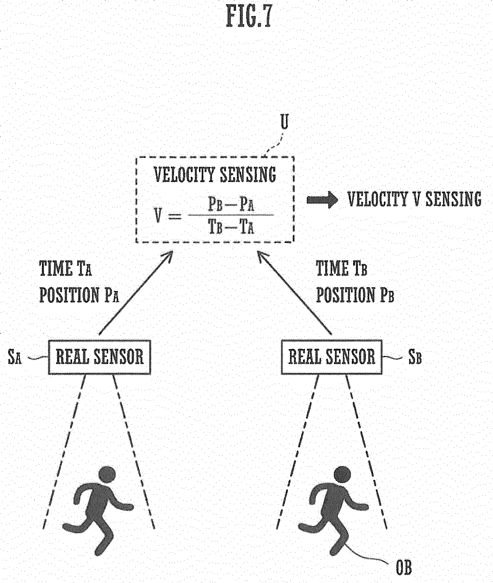

Subsequently, with reference to Figs. 7, 8, and 9, a processing mode in a virtual sensor is described. It should be noted, in these examples, a virtual sensor U is set by two real sensors SA and SB. Additionally, in a dotted line frame indicating the virtual sensor U, the content of a process performed in the virtual sensor U is illustrated.

The real sensors SA and SB in the example of Fig. 7 each have a function of sensing a position of an object and the sensing areas do not overlap. By utilizing the relationship, in this example, each of the real sensors SA and SB is made to transmit sensed time TA and TB as well as positional information PA and PB that each of the real sensors has sensed.

The virtual sensor U, by an arithmetic process ($V=(PB-PA) / (TB-TA)$) using the information transmitted from each of the real sensors SA and SB, calculates a moving speed V of an object OB (a person in the illustrated example) that sequentially passes the sensing area of the real sensors SA and SB and outputs this moving speed V as sensing data.

Although, in the example of Fig. 7, the objects sensed by the real sensors SA and SB are not guaranteed to be the same, if each of the real sensors SA and SB is arranged at a relatively short distance along a route such as a road, the sensing data of the virtual sensor U will have a significantly high reliability degree. In addition, based on an estimated range of the moving speed of the object OB to be sensed, an upper limit value and a lower limit value of the speed V are set, and if V is output only when the value of V is between the upper limit value and the lower limit value, the accuracy of the sensing data can be enhanced.

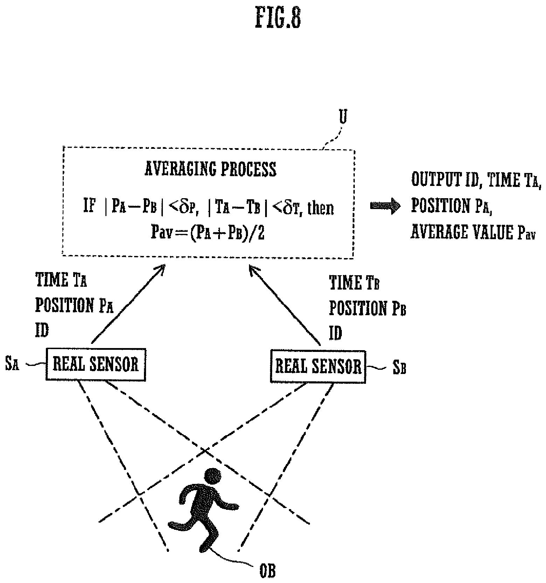

The real sensors SA and SB in the example of Fig. 8 each have a function of reading not only a position of an object OB but also identification information (ID) of the object OB. For example, the combination of the range sensor and the reader/writer for an RFID that are previously described can be used as real sensors SA and SB. Moreover, the real sensors SA and SB of this example have respective sensing areas that are overlapped with each other, and transmit the sensed positional information PA and PB, and the sensed ID together with the sensed time TA and TB.

The virtual sensor U, on condition that the IDs from both the real sensors SA and SB are in agreement with each other, acquires an absolute value of a difference between the positional information PA and PB and an absolute value of a difference between the time TA and TB. Then, if each absolute value is below predetermined threshold values $\delta P$ and $\delta T$, the virtual sensor U assesses that the transmit information from the real sensors SA and SB is information acquired from the same object at the same time and calculates an average value Pav between PA and PB. Then, the virtual sensor U outputs the ID, the output (PA and TA) from one of the real sensors (the real sensor SA in the illustrated example), and the average value Pav as sensing data.

In the application that utilizes the output from the above virtual sensor U, PA and TA are used with reference to the average value Pav as information indicating the reliability degree of PA. Alternatively, Pav can also be used as positional information.

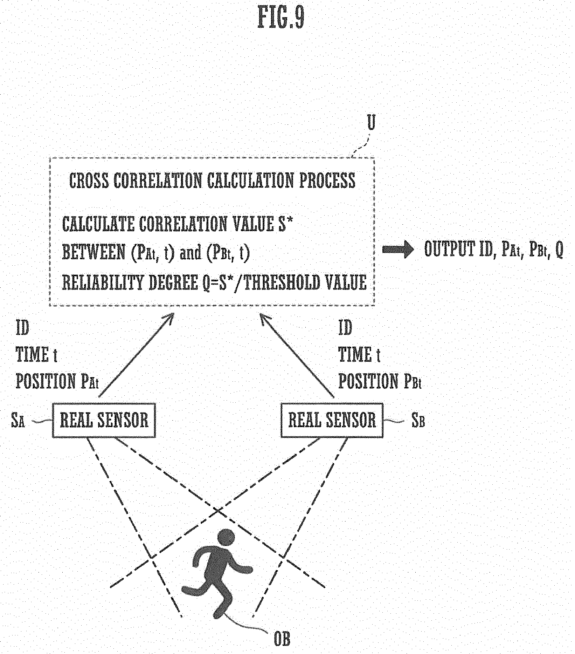

The real sensors SA and SB in the example of Fig. 9 similar to the example of Fig. 8 also have a function of sensing positional information PA and PB and an identification code (ID) of an object OB and transmit the sensed information together with the sensed time. In addition, the sensing areas of each of the real sensors SA and SB similarly have respective sensing areas that are also overlapped with each other.

In Fig. 9, positional information output from each of the real sensors SA and SB at the same time t is set as PAt and PBt. The virtual sensor U fetches the sensing data from each of the real sensors SA and SB at every certain time interval, and calculates a correlation value S* between a change pattern of (PAt, t) and a change pattern of (PBt, t) by targeting a set of information (PAt, t) (PBt, t) transmitted from each of the real sensors SA and SB during a period when the IDs sensed by the respective real sensors match. Furthermore, the virtual sensor U calculates a value Q obtained by dividing the correlation value S* by a predetermined threshold value and outputs each value of PAt and PBt per hour, ID, and Q as sensing data.

According to the above processes, the virtual sensor U can output the substantial sensing data based on ID, PAt, and PBt with the reliability degree Q. In the application that utilizes the output, with reference to ID, a moving route etc. of the object for each ID can be discriminated by PAt or PBt, or an average value of both values. Additionally, based on the reliability degree Q, whether or not sensing data is employed can be assessed and the reliability degree of a process in an own system can be obtained.

In the examples of Fig. 7 to Fig. 9, while the virtual sensor U by the combination of the real sensors SA and SB that output the same kind of sensing data is set, the present invention is not limited hereto and real sensors that output different kinds of sensing data may be combined. For example, a virtual sensor can be set, the virtual sensor discriminating whether the sensing data from each of the real sensors satisfies a predetermined condition, outputting "True" when the sensing data from both real sensors satisfies the condition, and outputting "False" otherwise.

The number of real sensors combined for setting a virtual sensor is not limited to two, and three or more real sensors can be combined. In addition, as described above, virtual sensors may be combined or a virtual sensor and a real sensor may be combined. Moreover, by applying a plurality of kinds of processing modes to a combination of the same types of sensors, a plurality of virtual sensors can also be generated.

In the information management device 1 of this preferred embodiment, a plurality of combinations that can function as a virtual sensor are selected from the real sensors registered in the sensing data provision condition DB 101 and a processing mode of each virtual sensor is also determined. Then, for each combination, the management information illustrated in Fig. 6A and Fig. 6B is created and registered in the virtual sensor management DB 105.

The contract matching processing unit 11 sequentially focuses attention on the applications registered in the sensing data use condition DB 102, extracts a real sensor or a virtual sensor that matches the use condition of the application being focused on, and selects a provision source sensor among these sensors. Additionally, when the above process to each application takes a round, again, the process is returned to the leading application and the similar process is repeated. Whenever a provision source sensor is selected, a provision source sensor number, and an application number and an IP address of a transmission destination are notified to the sensing data delivery processing unit 13, and the sensing data delivery processing unit 13 executes transmission of sensing data in cooperation with the sensing data processing unit 12.

In this way, a process in which a provision source sensor of sensing data is specified and a process in which the sensing data from the specified provision source sensor is transmitted are repeatedly and cyclically executed. It is to be noted that the processing speed of each processing unit is ensured so that a time required to make a process to each application take a round may become below a sensing period guaranteed to the application side.

According to the above circulation process, without fixing association between an application that uses sensing data and a provision source sensor of sensing data, the association can be flexibly changed according to conditions of both the application and the provision source sensor. For example, in a case in which a real sensor is selected as a provision source sensor, the real sensor being set to provide sensing data only daytime, the provision source sensor is changed at night. In a case in which sensing data that the application side requires are different according to time, a provision source sensor is also changed corresponding to changes in kind of necessary sensing data.

The association between a sensor and an application can also be changed by changes in registration information. For example, with reference to the above described Fig. 2 to Fig. 4, while the real sensor S1 of provision condition information in Fig. 2 matches the application by the use condition information illustrated in Fig. 3, if the content and the contract of this application are changed and the use condition information is updated as in Fig. 4, the sensing data type of the real sensor S1 will not match updated use condition information. In this case, for example, based on the management information illustrated in Fig. 6A, the virtual sensor U1 is selected as a new provision source sensor.

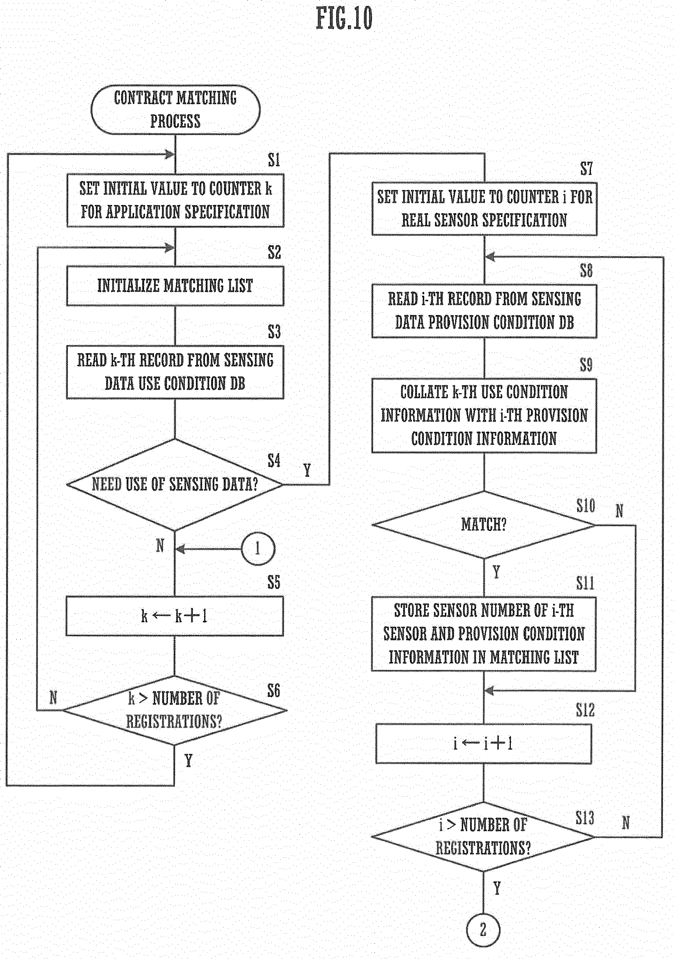

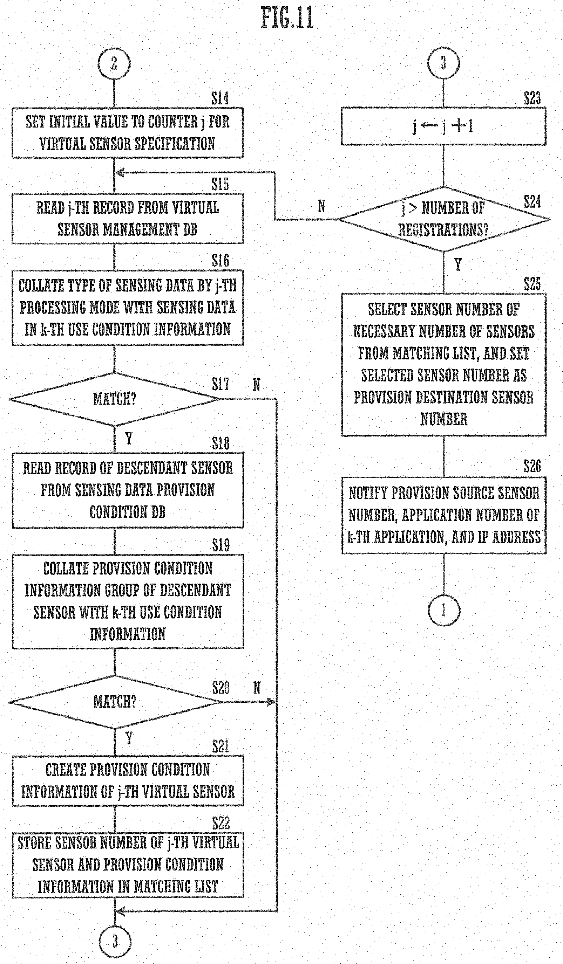

Fig. 10 and Fig. 11 illustrate a procedure of processes that the contract matching processing unit 11 executes for the above association process. To begin with, description is made with reference to Fig. 10. The contract matching processing unit 11 sets an initial value (1, for example) to a counter k for specifying an application to be focused on (step S1). Next, the contract matching processing unit 11 initializes (sets in a state in which there is no data) a matching list (step S2).

Then, the contract matching processing unit 11 reads information of the k-th record from the sensing data use condition DB 102 (step S3), and, based on a sensing period in a read record and delivery log information in the delivery log DB, assesses whether or not it is a timing when the k-th application needs use of sensing data (step S4). In the case of assessing that it is not the timing when the k-th application needs use of sensing data ("NO" in step S4), the contract matching processing unit 11 increments k (step S5) and proceeds to a process to the following application. It should be noted that when k after increment is below the number of registrations ("NO" in step S6), the process returns to step S2 and when k after increment exceeds the number of registrations ("YES" in step S6), the process returns to the first step S1.

In the case of assessing that it is a timing the k-th application needs use of sensing data ("YES" in step S4), the contract matching processing unit 11 sets an initial value (1, for example) to a counter i for specifying a real sensor (step S7). Then, the contract matching processing unit 11 reads information of the i-th record in the sensing data provision condition DB (step S8), and collates the provision condition information with the k-th use condition information that has been read in step S3 (step S9).

For example, in a case in which the provision condition information has a configuration illustrated in Fig. 2 and use condition information has a configuration illustrated in Figs. 3 and 4, and in a case in which, in step S9, a sensing data type is completely in agreement between the k-th use condition information and the i-th provision condition information, a value that the i-th provision condition information shows regarding a sensing area, a sensing period, a reliability degree, and a consideration is included in a range in which the k-th use condition information defines, and a purpose that the k-th use condition information shows regarding a use purpose is set as a permitted purpose in the i-th provision condition information, the contract matching processing unit 11 assesses that the i-th provision condition information matches the k-th use condition information. In a case of assessing that the two match ("YES" in step S10), the contract matching processing unit 11 proceeds the process to step S11 and stores the sensor number and the provision condition information of the i-th sensor on the k-th matching list. In a case in which even one item deviates from the above requirements in collation in step S9, the contract matching processing unit 11 assesses the i-th provision condition information does not match the k-th use condition information ("NO" in step S10) and skips step S11.

Hereinafter, by incrementing i until i reaches the number of registrations in steps S12 and S13 and executing the above described steps S8 to S11 with respect to i per hour, all the real sensors that match the k-th use condition information are extracted and the respective combinations of the sensor number and the provision condition information of the real sensors are stored in the matching list.

Subsequently, description is made with reference to Fig. 11. When the determination is "YES" in the above step S13, the contract matching processing unit 11 sets an initial value (1, for example) to a third counter j for specifying a virtual sensor (step S14), reads information of the j-th record in the virtual sensor management DB (step S15), and checks whether or not a type of the sensing data generated by a processing mode in this j-th record matches a type that the k-th use condition information defines (step S16). In a case in which the types match ("YES" in step S17), based on a sensor number of a descendant sensor in the j-th record, the contract matching processing unit 11 reads the provision condition information of real sensors in a descendant position of the j-th virtual sensor from the sensing data provision condition DB 101 (step S18) and assesses whether or not the provision condition information group by these descendant real sensors matches the k-th use condition information (step S19).

Specifically, in step S19, the contract matching processing unit 11 assesses regarding conditions other than a sensor data type and a consideration whether or not all the conditions in each descendant sensor match the use condition information. In a case in which these conditions match, furthermore, the contract matching processing unit 11 collates the total of considerations in each real sensor with a consideration that the use condition information defines, and, if the former value does not exceed the latter value, assesses that the provision condition information by the descendant real sensors matches the k-th use condition information. When assessing that the two match ("YES" in step S20), the contract matching processing unit 11 creates provision condition information of the j-th virtual sensor by integrating the provision condition information in the descendant real sensors and a sensing data type of a virtual sensor (step S21). Then, the contract matching processing unit 11 stores in the matching list the sensor number of the j-th virtual sensor and the provision condition information created in step S21 (step S22).

Hereinafter, by incrementing j until a value of j reaches the number of registrations of the virtual sensor (steps S23 and S24) and repeating the above described steps, all the virtual sensors that match the k-th use condition information are extracted and the respective combinations of the sensor number and the provision condition information of the virtual sensors are stored in the matching list.

When the value of j reaches the number of registrations ("YES" in step S24), the contract matching processing unit 11 selects the number of sensors that the application requires from the use condition information of the k-th application, extracts a sensor number of the necessary number of sensors from the sensor numbers stored in the matching list, and sets the extracted sensor number as a provision source sensor number of sensing data (step S25). Furthermore, the contract matching processing unit 11 notifies the set provision source sensor number, and the application number and the IP address of the k-th application to the sensing data delivery processing unit 13 (step S26). It should be noted in a case in which the matching list is empty, step S25 is skipped.

The process in which a sensor number set as a provision source sensor number is selected in step S25 is performed in consideration of the provision condition information combined with the sensor number. For example, if the sensor number for the necessary number of sensors is selected sequentially from a sensor number of the sensor of which the amount of the consideration is the lowest, the cost on the application side can be decreased. Additionally, if a sensor number for the necessary number of sensors is selected sequentially from a sensor number having the highest reliability degree, the accuracy of the sensing data to be provided can be increased. More specifically, the standard of selection is determined by a contract for each application, the standard is also registered in the sensing data use condition DB, and sensing data may be selected in accordance with the registered standard.

After the output to the sensing data delivery processing unit 13 in step S26 is completed, each contract matching processing unit 11 returns to step S5 in Fig. 11, increments the counter k, and proceeds the process to processing with respect to the following application. When the value of k reaches the number of registrations and step S6 is set to "YES, " the process is returned to the first step S1 and k is again returned to an initial value. As a result of this, a process of the following cycle is started.

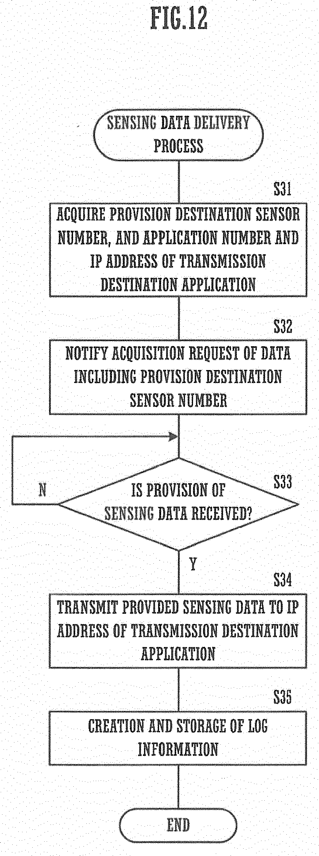

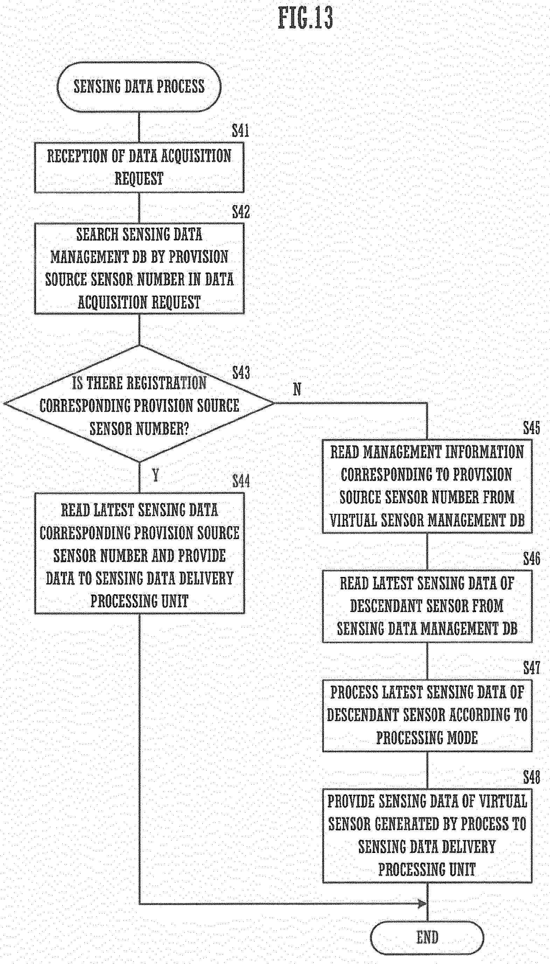

Fig. 12 illustrates a procedure of processes (steps S31 to S35) by the sensing data delivery processing unit 13, and Fig. 13 illustrates a procedure of processes (steps S41 to S48) by the sensing data processing unit 12. Hereinafter, with reference to step reference signs of both figures, description will be made of a process in which sensing data to be transmitted is acquired and transmitted.

By the above-mentioned processes by the contract matching processing unit 11, when the provision source sensor number with respect to the predetermined application is selected, and a provision source sensor number, an application number and an IP address of a transmission destination are notified, the sensing data delivery processing unit 13 starts the process illustrated in Fig. 12. To begin with, the sensing data delivery processing unit 13 acquires the provision source sensor number, the application number and the IP address of a transmission destination application that have been notified from the contract matching processing unit 11 (step S31), and notifies an acquisition request of data including a provision source sensor number to the sensing data processing unit 12 (step S32). In response to this, the sensing data processing unit 12 starts a process illustrated in Fig. 13.

The sensing data processing unit 12 receives a data acquisition request (step S41), and searches the sensing data management DB 104 by the provision source sensor number included in the request (step S42). On one hand, if the provision source sensor number is a number of a real sensor, sensing data corresponding to the sensor number is stored in the sensing data management DB 104, so that the determination of step S43 is "YES. " In this case, the latest sensing data corresponding to the provision source sensor number is read from the sensing data management DB 104 and is provided for the sensing data delivery processing unit 13 (step S44).

On the other hand, in a case in which the provision source sensor number is a number of a virtual sensor, the determination of step S43 is "NO." In this case, the sensing data processing unit 12 accesses the virtual sensor management DB 105 by the provision source sensor number, and reads management information corresponding to the provision source sensor number (step S45). Then, based on the sensor number of each of the descendant sensors in the read management information, the latest sensing data of each of the descendant sensors is read from the sensing data management DB 104 (step S46), and is processed in accordance with a definition determined by a processing mode in the management information. By this process, sensing data of the virtual sensor is generated (step S47).

It is to be noted in a case in which the sensor number of the descendant sensor read in step S45 is a number of a virtual sensor, after executing steps S45, S46, and S47 based on the number and generating the sensing data of a descendant virtual sensor, step S47 using the sensing data is executed.

After the sensing data of a virtual sensor is generated, the sensing data processing unit 12 provides the sensing data delivery processing unit 13 with the generated sensing data (step S48). With the provision of the sensing data in this step S48 or the previous step S44, the process of the sensing data processing unit 12 to a data acquisition request ends.

Reference is returned to Fig. 12 to continue description. The sensing data delivery processing unit 13, after having transmitting the data acquisition request, stands by until receiving a provision of the sensing data corresponding to the request (step S33). When the process by the sensing data processing unit 12 ends and sensing data is provided, the determination of step S33 becomes "YES," the process proceeds to step S34, and the sensing data that has been provided is transmitted to the IP address that has been acquired in step S31. Furthermore, log information configured to include a provision source sensor number, an application number and an IP address of a transmission destination application, a date of transmission, etc. that are added to the transmitted sensing data is created and stored in the distribution log DB 106 (step S35).

A series of procedures illustrated in the above Fig. 10 to Fig. 13 make it possible to select, for an application that requires sensing data, a real sensor or a virtual sensor that matches the use condition of the application and to provide the latest sensing data generated by a selected sensor to the application. Accordingly, any application can implement a process in accordance with respective purpose.

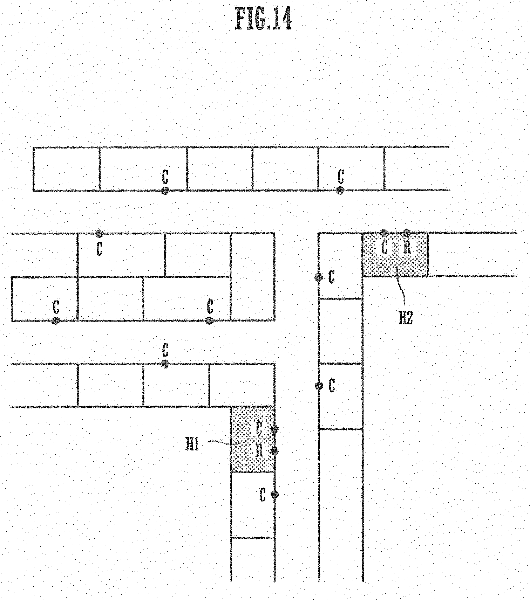

Fig. 14 is a view illustrating a specific example of an application that receives a provision of sensing data from the above information management device 1. The application of this preferred embodiment monitors a path in a residential area for the purpose of watching by utilizing image data generated in an area to be monitored. Necessary sensing data is provided from a security camera C mounted on a place such as a main entrance of a residence of a person who has contracted with a system operator in the residential area. The resident of residences H1 and H2 is a contractor of the system and also a user of an application, and a reader/writer R for an RFID in addition to the security camera C are mounted on each of the residences H1 and H2.

The image data of each of the camera C is, in equipment for communication (such as a smartphone exclusive for processing) of a residence of an owner, processed into sensing data combined with positional information of the residence, and is transmitted to the information management device 1. In the residences H1 and H2, identification information read by the reader/writer R is also incorporated in the sensing data. In the information management device 1, after the provision condition information of a sensor in each contractor is confirmed to be matched with the use condition information of the application side, sensing data of the each sensor is provided to the application side system 2.

In the application side system 2, when the previously registered identification information is sensed from the sensing data including the read data of RFID, a feature (a face, the color and length of hair, the color of clothes, etc.) of a person included in the image in this sensing data is extracted. Then, whether or not a similar feature is included in an image of other pieces of sensing data is checked.

In a case in which a similar feature is extracted from a plurality of images, a movement path of a person corresponding to the previously sensed identification information is recognized by arranging positional information in association with these images in order in which the feature has been extracted. It should be noted that a virtual sensor can also be set by combining several pieces of sensing data used in this example.

According to the above processes, by giving a RFID tag to those who need to be watched, such as an elderly person and a child, when the person leaves home, the identification information read from the RFID tag and the movement path recognized by image processing can be associated with each other so that a movement destination of the person can be checked. In a case in which the movement path may exit from the predetermined area to be managed, it is also possible to notify to a registered contact destination.

While, in the example of the above Fig. 14, the camera C arranged in a fixed position for the purpose of crime prevention is utilized as a sensor and used for service to a specific user, the similar structure can also construct a security system (track of a suspicious person) of the entire residential area.

In addition, if an image by a camera placed for the purpose of fixed point observation is transmitted to the information management device 1 as sensing data, this image can also be utilized by a system for analyzing the traffic of persons or cars. Moreover, if the image is an image having high resolution and being taken by a camera installed in a place such as a mountain area and a rural zone, the image can be provided to an application that offers service in which an image for appreciation is distributed to a person who is interested in such an image.

Next, a network system as another preferred embodiment of the present invention is described.

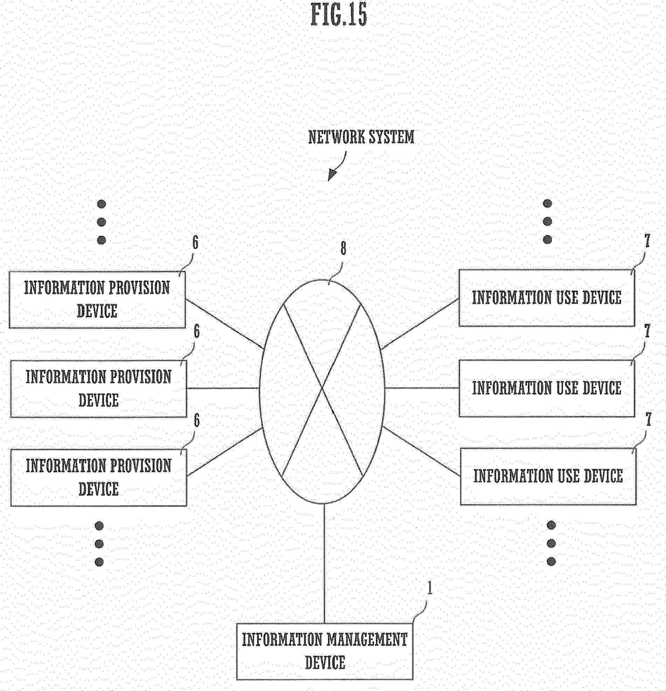

Fig. 15 is a block diagram illustrating a schematic configuration of the network system according to another preferred embodiment of the present invention. This network system is equipped with an information management device 5, a plurality of information provision devices 6, and a plurality of information use devices 7. The information management device 1, the information provision devices 6, and the information use devices 7 are connected in a communicable manner through a network 8. The information provision device 6 is equivalent to the sensor in the above described preferred embodiment, and the information use device 7 is equivalent to the device of the application side system 2 in the above described preferred embodiment.

The information provision device 6 acquires information corresponding to the main purpose thereof and executes a process corresponding to the purpose. The information provision device 6 is not a specific kind of device but various kinds of device. For example, if the information provision device 6 is a monitoring instrument that monitors a suspicious person etc., the device acquires a photographed image of a camera that photographs an area to be monitored, and then senses a presence of a suspicious person and displays the photographed image of the area to be monitored on a display device. If the information provision device 6 is an air conditioning control system that controls an air conditioner, the device acquires a temperature of a floor with a temperature sensor or acquires a photographed image of a camera that photographs the floor, assesses a congestion degree of the floor, the number of persons, and so on, and then controls the operation of the air conditioner. If the information provision device 6 is an automatic ticket machine installed at a ticket gate of a station, the device reads a train ticket (a ticket, a commuter pass, etc.) of an entering person and an exiting person, senses the pass of a ticket gate path as a ticket checking process, measures the number of entering persons and the number of exiting persons, and the like.

It is to be noted the information provision device 6 may be a photographing device, such as a camera that photographs an area to be monitored, a temperature sensor that measures the temperature of a floor, and so on.

Since the above described devices exemplified as the information provision device 6 are publicly known, a detailed description thereof is therefore omitted.

A person who operates and manages the information provision device 6 (hereinafter referred to as the provider) can provide other devices (the information use device 7) with information that this information provision device 6 has acquired. In addition, the provider can restrict the use of providing information according to a type or the like of a usable application program (hereinafter simply referred to as the application).

The information use device 7 is an information processing device such as a personal computer, a mobile phone, etc. that a user using the information that the information provision device 6 provides possesses. The information use device 7 includes an application installed therein, the application using information that the information provision device 6 provides.

The information management device 1 manages: provider contract information based on a contract, with a provider, concerning a provision of the information from the information provision device 6; user contract information based on a contract, with a user, concerning use of the information in the information use device 7; and the like. In addition, the information management device 1, based on the provider contract information and the user contract information, acquires information from the information provision device 6 and transmits (provides) information to the information use device 7. The information management device 1 does not transmit information that is not permitted from being used by the use restriction, to the information use device 7. In this way, the information management device 1 performs information management and information relay, between the information provision device 6 that provides information and the information use device 7 that uses the provided information.

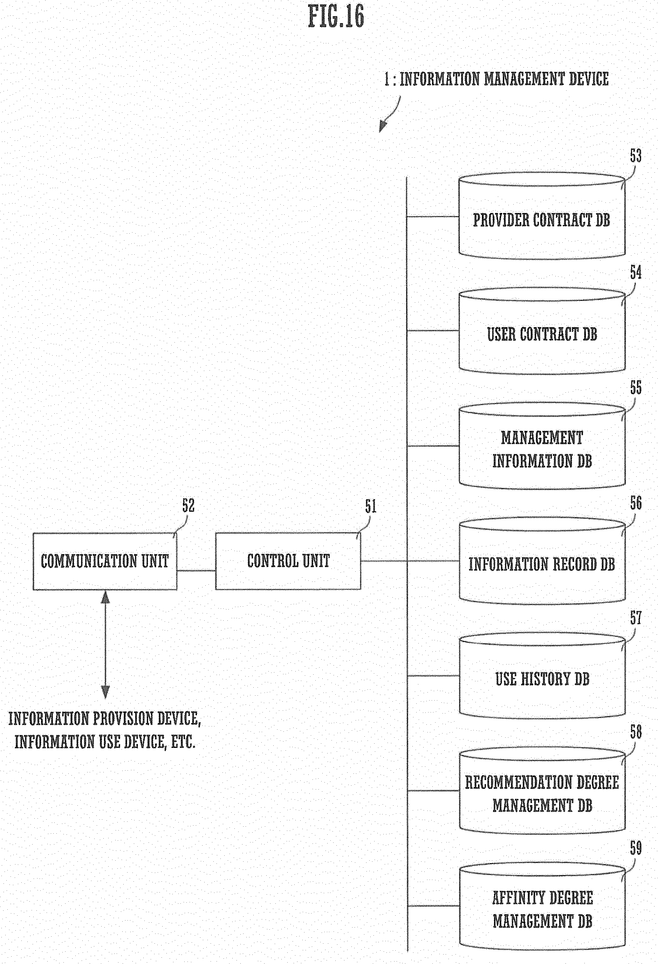

The configuration of the information management device 1 according to this preferred embodiment will be described in detail. Fig. 16 is a block diagram illustrating a configuration of a main part of the information management device. The information management device 1 includes: a control unit 51, a communication unit 52, a provider contract database 53 (provider contract DB 53), a user contract database 54 (user contract DB 54), a management information database 55 (management information DB 55), an information record database 56 (information record DB 56), a use history database 57 (use history DB 57), a recommendation degree management database 58 (recommendation degree management DB 58), and an affinity degree management database 59 (affinity degree management DB 59).

The control unit 51 controls the operation of the main body of the information management device 1.

The communication unit 52, through the network 8, performs communication with the information provision device 6 and with the information use device 7.

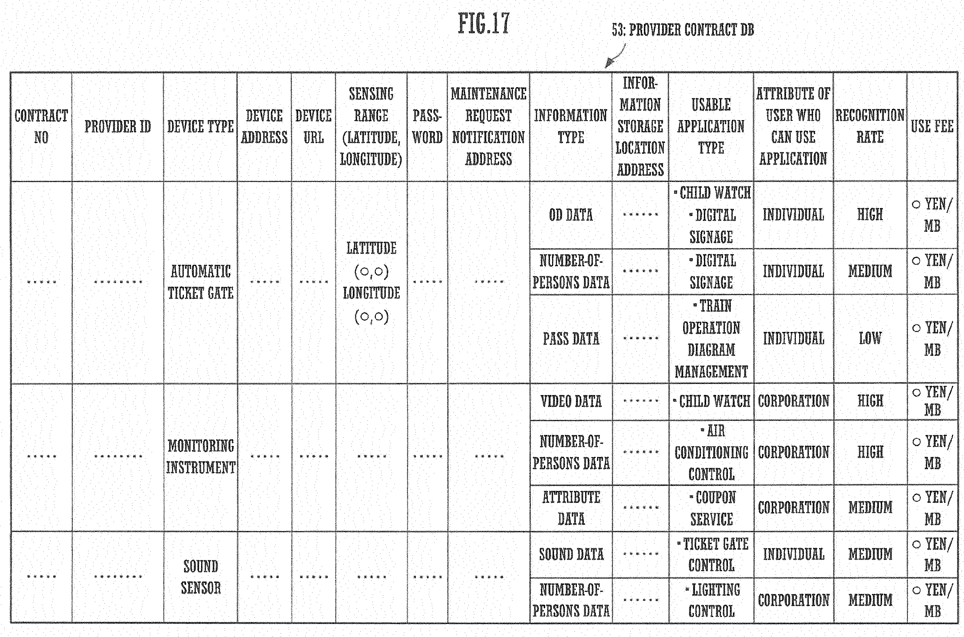

The provider contract DB 53 registers the content of the contract related to a provision of information exchanged with a provider. Fig. 17 is a schematic view illustrating the configuration of the provider contract DB. This provider contract DB 53 is equivalent to the provision condition storage unit defined by the present invention. The provider contract DB 53 registers, for each contract concerning a provision of information with a provider, a record in which a contract number (contract No), a provider ID, a device type, a device address, a device URL, a sensing range, a password, a maintenance request notification address, an information type, an information storage location address, a usable application type, an attribute of a user who can use an application, a recognition rate, and a use fee are associated with one another. The provider exchanges such a contract for each piece of information to provide.

The contract number is a unique number given individually to each contract concerning a provision of information with a provider. The provider ID identifies the provider. The device type is a type of the information provision device 6 that acquires information to be provided, for example, an automatic ticket gate, a monitoring instrument, an air conditioning control system, a monitoring camera, a sound sensor, etc. that have been described above. The device address is an IP address of this device. The device URL is a URL (Uniform Resource Locator) of this device.

The sensing range shows a range in which information provided by the information provision device 6 is acquired. This preferred embodiment exemplifies a case in which this range is registered with latitude and longitude. The password, when the change and updating of this contract is performed , is a character string that an operator makes a provider input in order to confirm whether the provider is identified. The password is set by the provider at the time of the contract.

The maintenance request notification address is a mail address designated by the provider and is a transmission destination (destination address) of mail concerning a maintenance request to the information provision device 6. The maintenance request is made when information is not provided and the like.

The information type is a type of information provided from the information provision device 6, and shows: information (raw data) that the information provision device 6 has acquired, such as video data, sound data, and the like; and processed data (metadata) obtained by processing the raw data that the information provision device 6 has acquired, such as OD data, number-of-persons data, and attribute data (attribute data indicating an adult, a child, a female, a male, and so on) .

The information storage location address shows an address on a recording medium (information record DB 56 to be described below) that records and stores information provided from the information provision device 6.

The usable application type shows the type of an application for which use of information is permitted. The attribute of a user who can use an application shows the attribute (an individual, a corporation, etc.) of a user who is permitted for the use of information. This usable application type and the attribute of a user who can use an application are included in information use restriction that the provider has set at the time of the contract, and are equivalent to restriction data defined by the present invention. In addition, in this preferred embodiment, while a type of an application and an attribute of a user that are permitted for use are registered as a use restriction, a type of an application and an attribute of a user that are not permitted for use may be registered.

The recognition rate shows the accuracy of information and classifies the accuracy according to three levels: high, medium, and low mainly based on an error (sensing accuracy of information in the information provision device 6) that is included in the information acquired in the information provision device 6. That is, the recognition rate is the reliability degree of information to be provided. The use fee is the amount charged to the user who has used the information. In Fig. 17, while the fee per MB is shown, the fee may be a fee per single use or may be determined in another form.

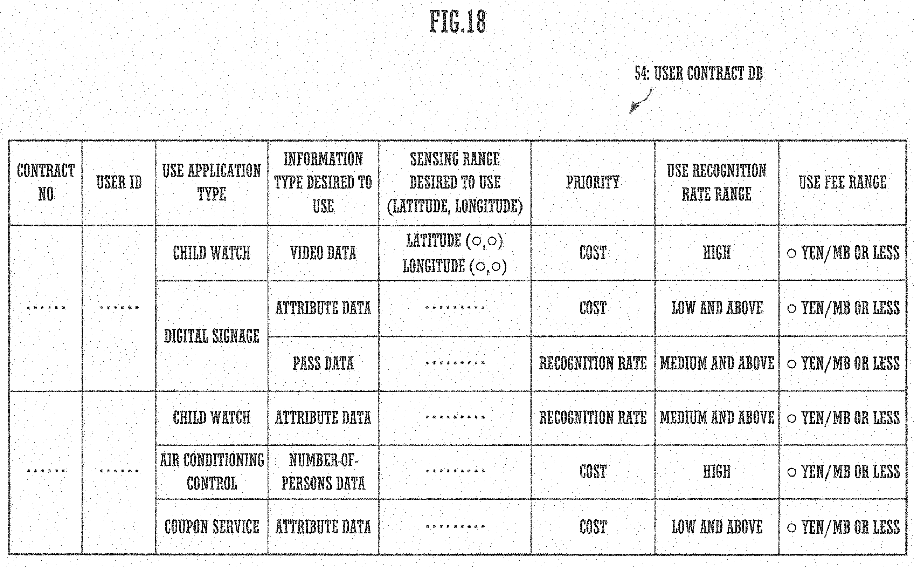

The user contract DB 54 registers the content of the contract concerning use of the information exchanged with a user. Fig. 18 is a schematic view illustrating the configuration of the user contract DB. This user contract DB 54 is equivalent to the use condition storage unit defined by the present invention. The user contract DB 54 registers, for each contract concerning a provision of information with a user, a record in which a contract number (contract No), a user ID, a use application type, a sensing range desired to be used, a priority, a use recognition rate range, and a use fee range are associated with one another.

The contract number is a unique number individually given to a contract concerning a provision of information with a user. The user ID identifies the user. The use application type is the type of an application for which the user uses the provided information. The information type desired to be used shows the type of information to be used.

The sensing range desired to be used shows the range in which information to be used is acquired. In this preferred embodiment, this range is registered with latitude and longitude.

The priority shows, for use of information, whether cost is given priority or a recognition rate is given priority. The use recognition rate range defines the lower limit of the recognition rate of information to be used. The use fee range defines the upper limit of the fee of information to be used. A user can set the priority, the use recognition rate range, and the use fee range at the time of a contract.

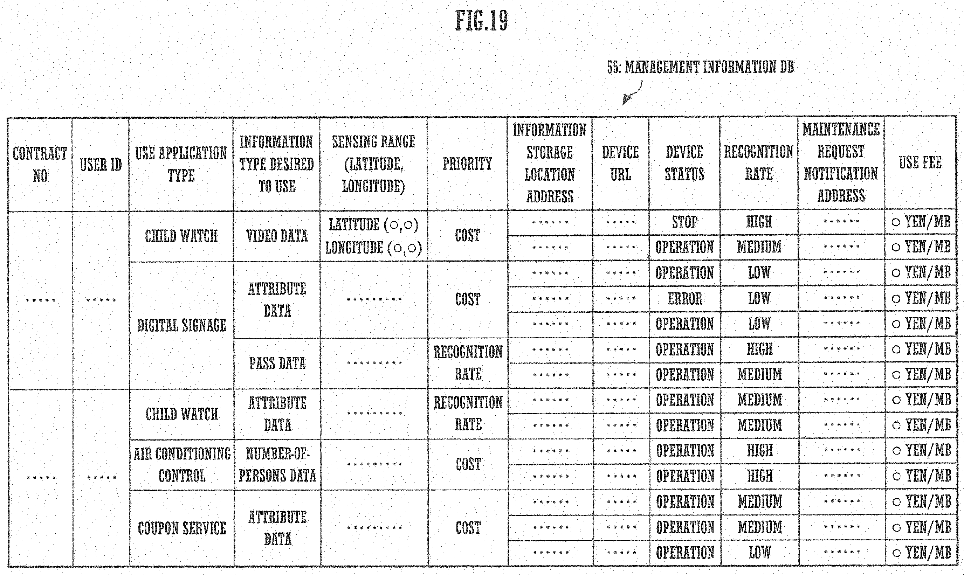

The management information DB 55 is generated based on the content of registration of the provider contract DB 53 and the user contract DB 54 that have been described above. Fig. 19 is a schematic view illustrating the configuration of the management information DB. This management information DB 55 is equivalent to the management information storage unit defined by the present invention. This management information DB 55 registers, for each user, a record in which a contract No (contract number of a user), a user ID, a use application type, an information type desired tobeused, a sensing range, apriority, an information storage location address, a device URL, a device status, a recognition rate, a maintenance request notification address, and a use fee are associated with one another. The control unit 51, at a predetermined timing (at midnight every day, for example), generates this management information DB 55 based on the content of registration of the provider contract DB 53 and the user contract DB 54 that have been described above. Accordingly, the management information DB 55 reflects an update of the provider contract DB 53 and the user contract DB 54 at a predetermined timing.

It should be noted that the management information DB 55 includes sensor status information. This is confirmed by communication with the relevant information provision device 6.

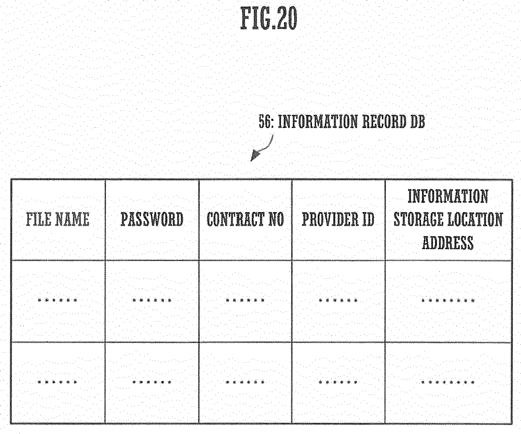

The information record DB 56 is the database that records and manages the information provided from the information provision device 6. Fig. 20 is a schematic view illustrating the configuration of the information record DB. The information record DB 56 registers a record in which a file name, a password, a contract No (contract number of a provider), a provider ID, and an information storage location address are associated with one another. The file name is the file name given to the information provided from the information provision device 6. The password, the contract No (contract number of a provider), the provider ID, and the information storage location address are registered in the provider contract DB 53. The control unit 51 also generates this information record DB 56 at predetermined timing by referring to the above described provider contract DB 53. The timing when the management information DB 55 is generated may be the same as or may be different from the timing when the information record DB 56 is generated.

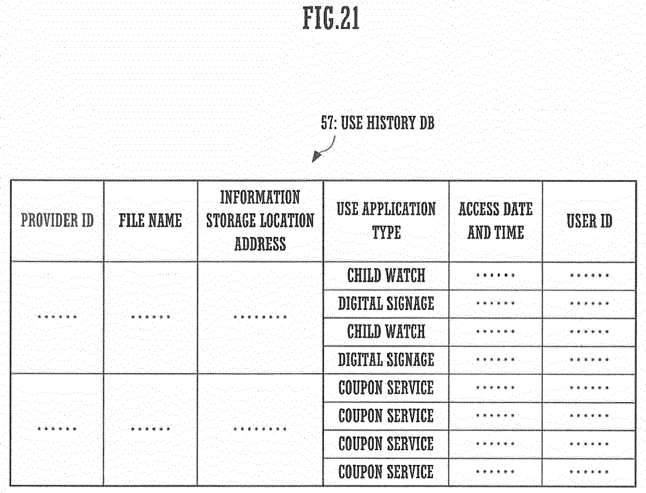

The use history DB 57 is the database in which the use history of information provided by a provider is registered. Fig. 21 is a schematic view illustrating the configuration of the use history DB. The use history DB 57 registers a record in which a provider ID, afilename, an information storage location address, a use application type, an access date and time, and a user ID are associated with one another.

In the use history DB 57, whenever a user uses information, with respect to the used information, a use application type, an access date and time, and a user ID are additionally registered. This use history DB 57 is used for calculation of a fee to be paid to a provider corresponding to the use of provided information and for calculation of a fee to be charged to a user corresponding to the use of the information, and so on.

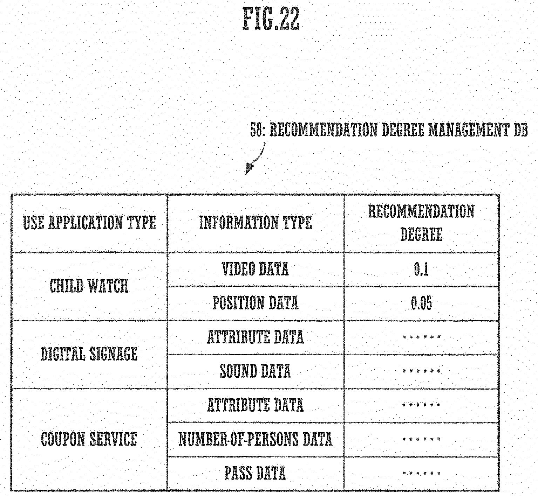

The recommendation degree management DB 58, as illustrated in Fig. 22, is the database in which, for each type of an application, a recommendation degree of information to be used by the application is registered. This recommendation degree is calculated by:

```
Recommendation degree

= (the number of users who use the type of information among users of the type of an application)/(total number of users of the type of an application).
```

For example, if the total number of users who use an application for child watch is 100 and the number of users who use video data is 10, the recommendation degree of video data in child watch is:

```
Recommendation degree=10/100=0.1.
```

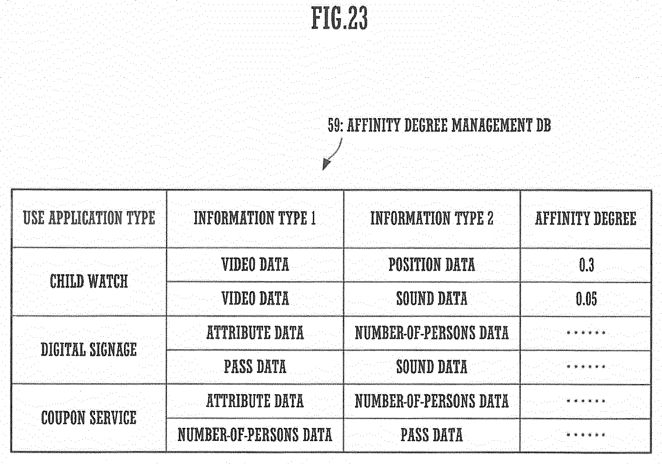

The affinity degree management DB 59, as illustrated in Fig. 23, is the database in which, for each type of an application, when two types of information are used in the application, an affinity degree in a combination of these two types of information is registered. This affinity degree is calculated by:

```
Affinity degree

= (the number of users who use these two types of information among users of the type of an application)/(total number of users of the type of an application).
```

For example, if the total number of users who use an application for child watch is 100 and the number of users who use two types: video data and sound data of information is 5, the affinity degree is:

```
Affinity degree = 5/100=0.05.
```

It is to be noted that, in Fig. 17 to Fig. 23, the columns indicated by "...." are columns in which an illustration is omitted or columns in which nothing is registered.

Subsequently, description will be made of the operation of this network system.

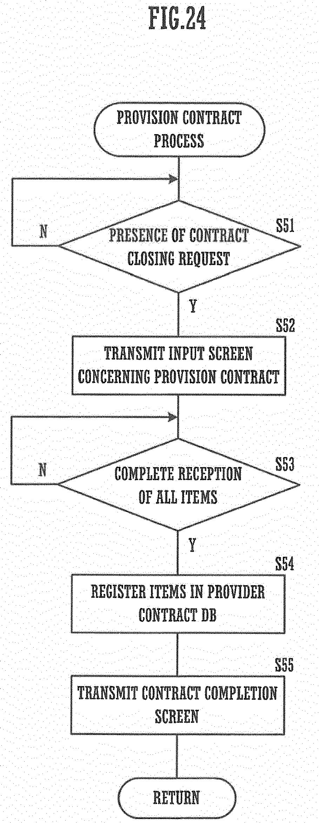

Tobeginwith, a process (provision contract process) performed when a contract concerning a provision of information is exchanged with a provider, will be described. Fig. 24 is a flowchart illustrating the operation of the information management device in this provision contract process.

The information management device 1 waits for a closing request of a contract concerning a provision of information to be transmitted from a provider through the network 8 (S51). The provider who closes the contract concerning a provision of information performs user registration in advance and owns a provider ID. The provider operates the information provision device 6 that actually acquires information to be provided, a personal computer, or the like, and transmits a closing request of the contract concerning the provision of information to the information management device 1. The closing request includes the provider ID.

The information management device 1, when receiving the closing request of the contract concerning the provision of information in the communication unit 52, transmits an input screen concerning a provision contract of information to the device that has transmitted this closing request (S52). The input screen to be transmitted in S52 includes input columns for a device type, a device address, a device URL, a sensing range, a password, a maintenance request notification address, an information type (or a plurality of information types), a usable application type, an attribute of a user who can use an application, a recognition rate, and a use fee. In other words, this input screen is a screen in which input for items to be registered in the provider contract DB 53 is requested. The provider performs input to each input column and sends this input back to the information management device 1.

The information management device 1, regarding all the items necessary for closing of a contract concerning a provision of information, when receiving the content (S53), determines a contract number and an address (information storage location address) on the recordingmedium in which the information for which the contract has been closed this time is recorded and stored, and registers the contract number and the address in the provider contract DB 53 (S54). In addition, the information management device 1 transmits a screen in which the completion of the contract is notified to the device that has transmitted the closing request of the contract concerning the provision of information this time (S55), and then returns the process to S51. In S55, the information management device 1 transmits the content of the contract concerning the provision of information this time to the provider.

In this way, the provider, when closing a contract concerning a provision of information, can set a usable application type and an attribute of a user who can use an application as a use restriction to the information. The provider can also set a use fee concerning the use of the information and can determine the value of the information to provide.

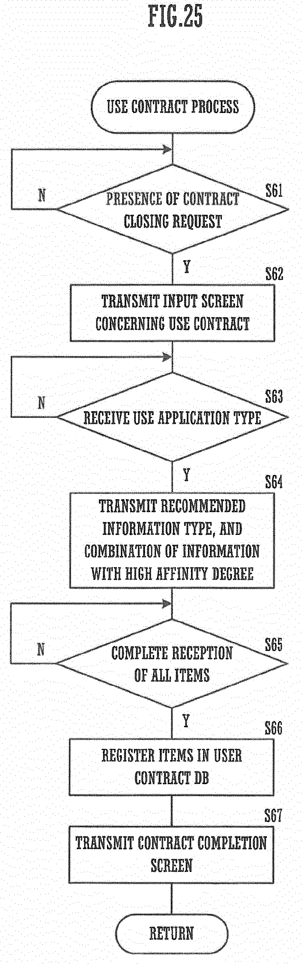

Then, a process (use contract process) performed when a contract concerning use of information is exchanged with a user, will be described. Fig. 25 is a flowchart illustrating the operation of the information management device in the use contract process. The information management device 1 waits for a closing request of a contract concerning use of information to be transmitted from a user through the network 8 (S61). The provider who closes the contract concerning use of information performs user registration in advance and owns a user ID. The user operates the information use device 7 or the like that actually acquires information to be provided and transmits a closing request of the contract concerning use of information to the information management device 1. The closing request includes the user ID.

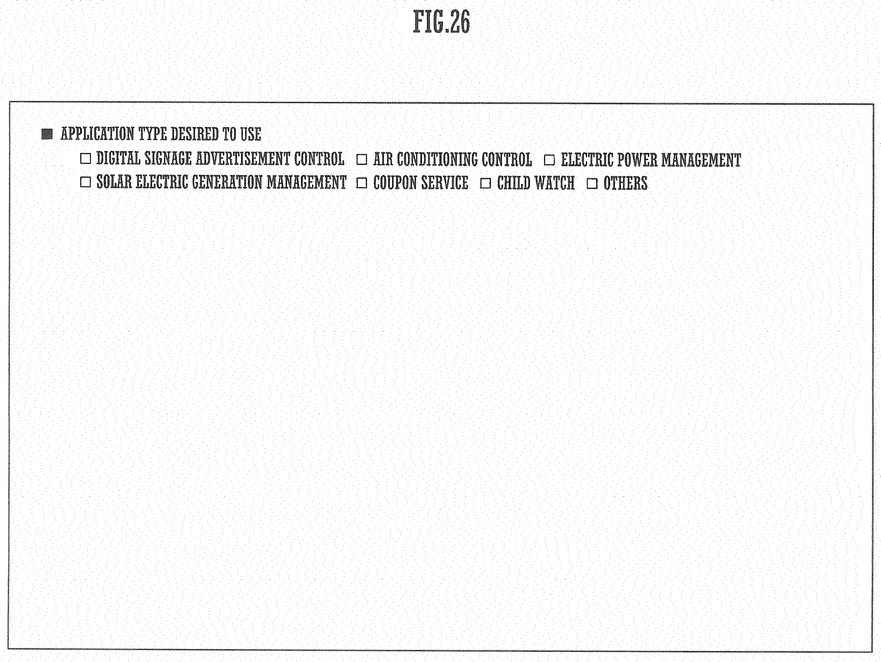

The information management device 1, when receiving the closing request of the contract concerning use of information in the communication unit 52, and transmits an input screen concerning a type selection of an application using information to the information use device 7 or the like that has transmitted this closing request (S62). Fig. 26 illustrates a display example of an input screen concerning a type selection that is transmitted from the information management device 1 in S62, in the information use device 7 and the like.

The user, in the input screen concerning this type selection, selects a type of an application using information and transmits a selected type to the information management device 1.

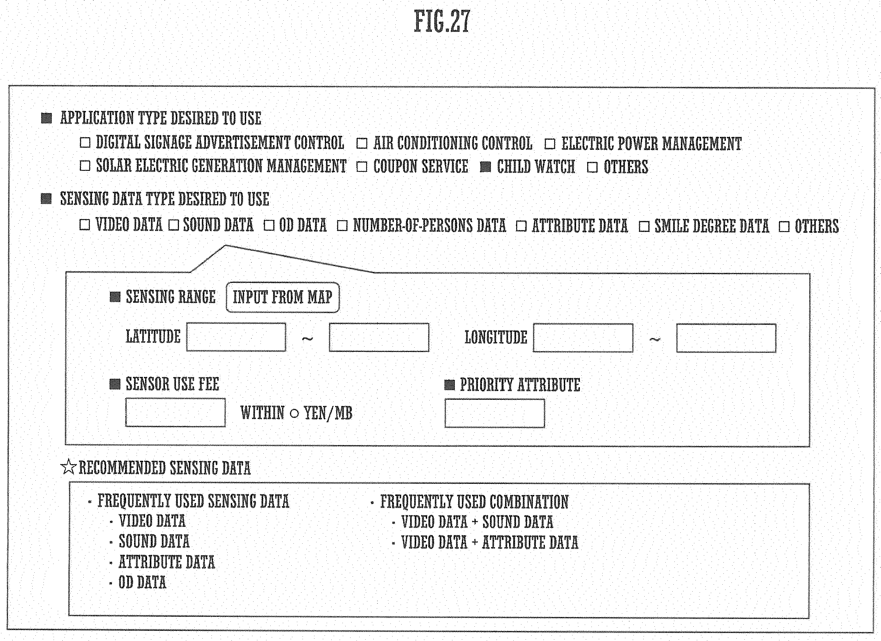

The information management device 1, corresponding to the type of the application using the information transmitted from the information use device 7 or the like, presents a type of information recommended for use of information, a combination of information of which affinity degree is high, and the like, and transmits the input screen in which input of necessary items in the use contract is requested (S63, S64). Fig. 27 illustrates a display example of an input screen that is transmitted from the information management device 1 in S64, in the information use device 7 and the like.

The recommended type of information, regarding the selected type of an application, may be a type of information of which the recommendation degree stored in the recommendation degree management DB 58 exceeds a predetermined threshold value. Alternatively, the recommended type of information may be a combination of information of which the affinity degree stored in the affinity degree management DB 59 exceeds a predetermined threshold value. Fig. 27 exemplifies a case in which child watch is selected as a type of an application.

Auser, while confirming a screen display illustrated in Fig. 27, inputs a type of information of which the use is desired, a sensing range, the upper limit of a use fee, a priority (cost or a recognition rate), etc.

The information management device 1, when receiving all the items necessary for closing of a contract concerning use of information (S65), determines a contract number, and registers the determined contract number in the user contract DB 54 (S66). In addition, the information management device 1 transmits a screen in which the completion of the contract is notified to the device that has transmitted the closing request of the contract concerning use of information this time (S67), and then returns the process to S61. In S67, the information management device 1 transmits the content of the contract concerning the use of information this time to the user.

In this way, the user, when closing a contract concerning use of information, can set a type of information to be used, the upper limit of a use fee, a priority, and so on, according to the desire of the user.

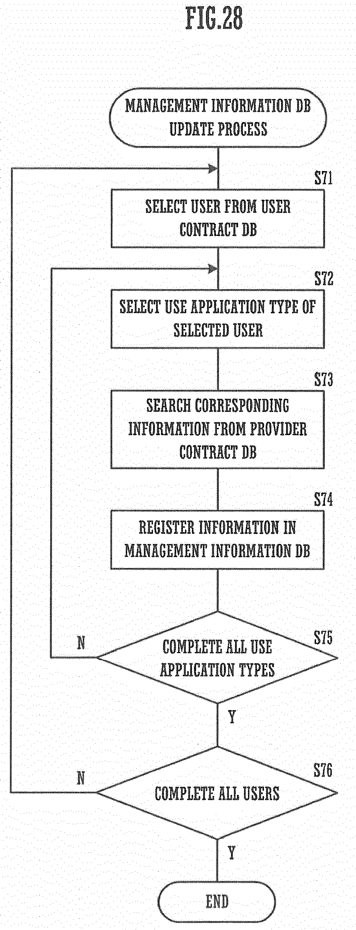

Subsequently, description will be made of a process of updating the management information DB 55 based on the provider contract DB 53 and the user contract DB 54. Fig. 28 is a flowchart illustrating a management information DB update process.

The information management device 1 selects one user registered in the user contract DB 54 (S71). The information management device 1 selects, for the user selected in S71, one use type application for which this user has closed the use contract (S72). The information management device 1 performs a search process in which information that can be provided to the use type application selected in S72 is all extracted from the provider contract DB 53 (S73). In S73, the information management device 1 searches information that can be provided based on a type of an application of which the provision that a provider has set at the time of the contract is permitted, and an attribute of a user. In other words, by the use restriction of information that the provider has set at the time of the contract, a provision of information to the user is restricted. The information management device 1 registers the information that is searched in S73 and can be provided, in association with the use type application selected in S72 in the management information DB 55 (S74).

The information management device 1, regarding the user selected in S71, with respect to all types of a use application for which the user has closed the use contract, determines whether or not the processes concerning the above described S72 to S74 have been executed (S75). The information management device 1, in S75, with respect to the user, if there is a type of a use application for which the processes concerning S72 to S74 are not completed, returns the process to S72 and repeats the above described processes.

In addition, the information management device 1, in S75, with respect to the relevant user, if there is no type of a use application for which the processes concerning S72 to S74 are not completed, with respect to all users registered in the user contract DB 54, determines whether or not the processes concerning S72 to S75 have been executed (S76). The information management device 1, in S76, if there is a user for which the processes concerning S72 to S75 are not completed, returns the process to S71 and repeats the above described processes.

As described above, when the contract (provision contract process illustrated in Fig. 24) concerning a provision of information with a provider and the contract (use contract process illustrated in Fig. 25) concerning use of information with a user are executed, the provider contract DB 53 and the user contract DB 54 are updated. The information management device 1, by repeatedly executing the management information DB update process illustrated in this Fig. 28 at a predetermined timing, updates the management information DB 55 corresponding to the update of the provider contract DB 53 and the user contract DB 54.

Then, description will be made of a process (information use process) performed when a user uses information provided from the information provision device 6 in an application.

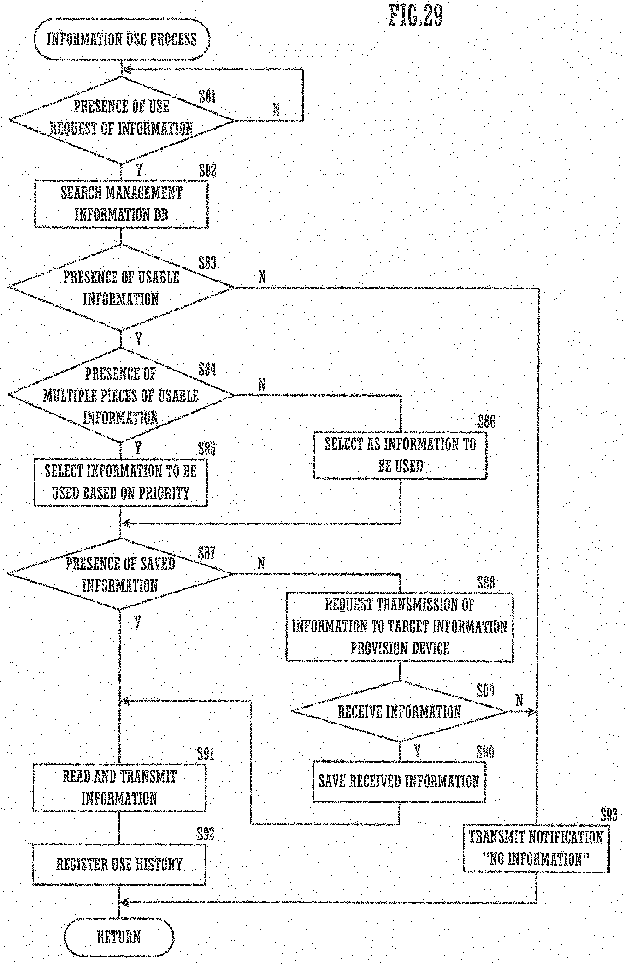

Fig. 29 is a flowchart illustrating this information use process in the information management device. The information management device 1, in the communication unit 52, waits for a use request of information to be transmitted (S81). The information management device 1, when receiving the use request, searches the management information DB 55 using the user ID and the use application type included in this use request (S82).

The information management device 1, with respect to the use type application of which use of information has been requested this time, assesses whether or not usable information is registered in the management information DB 55 (S83).

The information management device 1, if usable information is not registered in the management information DB 55, proceeds the process to S93 described below.

The information management device 1, when usable information is registered in the management information DB 55, determines whether or not the registered usable information is one piece or more than one piece (S84). On one hand, the information management device 1, if usable information is one piece, selects the information as information to be utilized (S86) . On the other hand, the information management device 1, if usable information is more than one piece, based on a priority, selects information to be used among a plurality of pieces of information (S85). In S85, the information management device 1, if cost is given priority, selects information of which the use fee is the lowest; and, if a recognition rate is given priority, selects information of which the recognition rate is the highest.

The information management device 1 assesses whether or not the information selected in S85 or S86 is stored in the information record DB 56 (S87). The information management device 1, if the information selected in S85 or S86 is not stored in the information record DB 56, requests transmission of information of the information provision device 6 that has contracted to provide this information (S88). The information management device 1, when receiving information from the information provision device 6 that is requested for transmission of information in S88, stores the information in the information record DB 56 (S89, S90). In S90, the information management device 1 records the information received from the information provision device 6 this time, under a predetermined file name at a predetermined address.

The information management device 1, with respect to the information use device 7 that has transmitted the use request this time, transmits information to be provided, creates a use history accompanying the transmission of this information, and registers the use history in the use history DB 57 (S91, S92).

It should be noted, in a case in which usable information is not registered in S83 or in a case in which the information requested in S89 is not transmitted from the information provision device 6, with respect to the information use device 7 that has transmitted a use request this time, notifies that the transmission of information cannot be performed (S93), and ends the process. In this case, the use history of information is not registered in the use history DB 57.

In this way, in this network system, the provider of information can set the use restriction to the information that the information provision device 6 provides.

In addition, the information management device 1, based on the content of registration of the provider contract DB 53 and the user contract DB 54, generates the management information DB 55, with respect to the use request of information from the information use device 7, searches this management information DB 55, and selects information that is provided to this information use device 7. Thus, a time required for the process in which information that is provided to the information use device 7 is selected can be shortened.

Description will be made of a use example of information provided in this network system in a child watch application installed in the information use device 7.

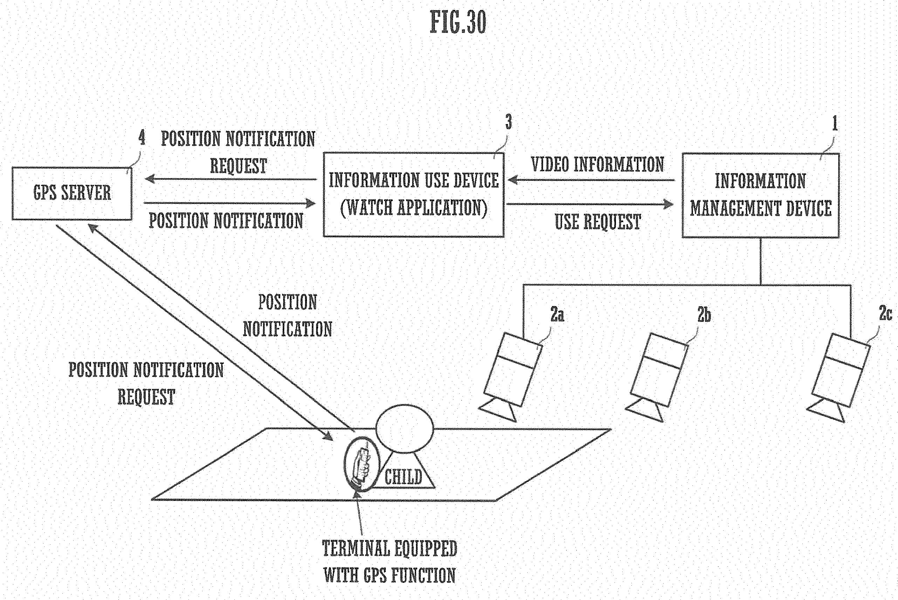

Fig. 30 is a schematic view illustrating use of information in the child watch application installed in the information use device. A GPS server 4 is a device that, with respect to a terminal (mobile phone, etc.) equipped with a GPS function under a contract, requests notification of a current position, and acquires a current position that has been transmitted from this terminal equipped with a GPS function. The terminal equipped with a GPS function has a publicly known GPS function and can measure a position of the own terminal.

In this preferred embodiment, a child of a user of the information use device 7 possesses the terminal equipped with a GPS function. The user operates the information use device 7 and executes the child watch application.

The information use device 7, when the child watch application is executed by the user, first executes a process in which a current position of the child of the user is acquired. This process is a process in which, with respect to the GPS server 4, a position notification of the terminal equipped with a GPS function that the child possesses is requested. This GPS server 4 is a server that a user has made a contract aside from the system, and performs a process in which a position of a child (that is, position of the terminal equipped with a GPS function) is notified to the information use device 7. The GPS server 4 requests the notification of a current position to the relevant terminal equipped with a GPS function in accordance with the request from the information use device 7. The terminal equipped with a GPS function acquires the position of the own terminal in accordance with the request from the GPS server 4, and notifies this position to the GPS server 4. In addition, the GPS server 4 transfers the position notified from the terminal equipped with a GPS function to the information use device 7.

Accordingly, the information use device 7 acquires the current position of the terminal equipped with a GPS function, that is, the current position of the child.

Then, the information use device 7 performs a use request of information to the information management device 1. This use request includes a user ID, a type of an application that utilizes the information (child watch application), a current position of a child acquired from the GPS server 4, and so on.

The information management device 1, based on this use request, selects information to be provided to the information use device 7. For example, a photographed image of a monitoring camera 2a is selected as information to be provided to the information use device 7. The sensing range (that is to say, photographed area) of the monitoring camera 2a includes the current position of the child acquired from the GPS server 4 this time. The reason the monitoring cameras 2b and 2c are not selected is that the photographed area is away from the current position of the child, the use fee is expensive, the recognition rate is low, or the like. The information management device 1 transmits the photographed image (video information) of the monitoring camera 2a to the information use device 7. The information use device 7 displays the photographed image of the monitoring camera 2a transmitted from the information management device 1 on an indicator or the like. The user confirms a status of the child by the displayed image.

Reference Signs List

| | |
|---|---|
| 1 | Information management device |
| 2 | Application side system |
| 6 | Information provision device |
| 7 | Information use device |
| 8 | Network |
| 10 | Sensing data acquisition unit |
| 11 | Contract matching unit |
| 12 | Sensing data processing unit |
| 13 | Sensing data delivery processing unit |
| 14 | Consideration settlement processing unit |
| 51 | Control unit |
| 52 | Communication unit |
| 53 | Provider contract DB |
| 54 | User contract DB |
| 55 | Management information DB |

| 56 | Information record DB |
|----|----|
| 57 | Use history DB |
| 58 | Recommendation degree management DB |
| 59 | Affinity degree management DB |
| 101 | Sensing data provision condition DB |
| 102 | Sensing data use condition DB |
| 103 | Contract DB |
| 104 | Sensing data management DB |
| 105 | Virtual sensor management DB |
| S1 to S5 | Real sensor |
| U1, U2, U3 | Virtual sensor |

**Claims**

1. An information management device (1) comprising:

a provision condition storage unit (101) in which, for each sensor (S1 to S5), provision condition information of sensing data generated by a sensor (S1 to S5) in association with identification information of the sensor (S1 to S5) is registered;
a use condition storage unit (102) in which, for each application (2) that requires use of the sensing data, use condition information of the sensing data required by an application in association with an address of a transmission destination of the sensing data is registered;
a sensing data acquisition unit (10) that is adapted to acquire through communication the sensing data generated by the sensor (S1 to S5) registered in the provision condition storage unit (101);
a specification unit (11) that is adapted to specify the provision condition information matched with the use condition information by searching the provision condition storage unit (101) for each piece of the use condition information registered in the use condition storage unit (102); and
a sensing data delivery unit (13) that is adapted to perform a transmission process in which, to a transmission destination address corresponding to the use condition information with which the specification unit (11) has specified the provision condition information matched, the sensing data that the sensing data acquisition unit (10) has acquired through communication with the sensor (S1 to S5) having the identification information in association with the provision condition information matched with the use condition information is transmitted, **characterized in that**
the provision condition information includes restriction information indicating use restriction of the sensing data against a use purpose of the sensing data generated by the sensor (S1 to S5), the restriction information including either

a usable application type indicating a type of an application for which use of the sensing data is permitted and an attribute of a user indicating a user who is permitted to use the sensing data or
a non-usable application type indicating a type of an application for which use of the sensing data is not permitted and an attribute of a user indicating a user who is not permitted

to use the sensing data, wherein the restriction information is settable by a provider of the sensing data when closing a contract concerning a provision of information,
the use condition information includes use purpose information indicating a use purpose of required sensing data, the use purpose information including a user ID which identifies the user and an use application type which is the type of an application for which the user uses the provided sensing data, wherein the use purpose information is settable by the user when closing a contract concerning use of information.

2. The information management device (1) according to claim 1, wherein
the provision condition information includes an information type and positional information of a sensing target area of the sensing data generated by the sensor (S1 to S5), and the use condition information includes an information type and positional information of a sensing target area of required sensing data.

3. The information management device (1) according to claim 1 or 2, further comprising:

a virtual sensor management information storage unit (105) which is adapted to register management information, the management information including:

the identification information of the sensors that are combined in order to set a virtual sensor that generates new sensing data by combining a plurality of the sensors among the sensors (S1 to S5) registered in the provision condition storage unit (101) and integrating the sensing data by the plurality of the sensors (S1 to S5);

a definition of a process of integration; and the information type of the sensing data generated by the integration; and

a data processing unit (12) that is adapted to acquire sensing data of the virtual sensor corresponding to the management information by integrating, based on the definition in the management information registered in the virtual sensor management information storage unit (105), the sensing data acquired by the sensing data acquisition unit (10) with respect to the plurality of the sensors (S1 to S5) corresponding to the identification information in the management information registered in the virtual sensor management information storage unit (105), wherein:

the specification unit (11) is adapted to specify, by searching the provision condition storage unit (101) and the virtual sensor management information storage unit (105) based on the use condition information registered in the use condition storage unit (102), a virtual sensor that generates sensing data of a type that matches the use condition information by a combination of the sensors (S1 to S5) of which the positional information of the sensing target area matches the use condition information; and the sensing data delivery unit (13) is adapted to transmit the sensing data acquired by the data processing unit (12) based on the management information of the virtual sensor specified by the specification unit (11) to the transmission destination address corresponding to the use condition information to be specified.

4. The information management device (1) according to any one of claims 1 to 3, wherein:

a use condition registered in the use condition storage unit (102) includes information indicating a timing when the sensing data is acquired;

the specification unit (11) is adapted to specify the provision condition information matched with the use condition information on condition that the use condition information to be processed reaches the timing when the sensing data is acquired while circulating a process in which the use condition information to be processed is changed in sequence; and

the sensing data delivery unit (13) is adapted to transmit the sensing data to a transmission address corresponding to the use condition information to be specified every time a specification process by the specification unit (11) ends, the specification process being performed with respect to a piece of the use condition information registered in the use condition storage unit (102).

5. The information management device (1) according to any one of claims 1 to 4, wherein:

the provision condition information registered in the provision condition storage unit (101) includes identification information of a provider of sensing data, and information indicating an amount of consideration that the provider desires to receive with respect to a provision of the sensing data;

the use condition information registered in the use condition storage unit (102) includes identification information of an application that receives the provision of sensing data, and information indicating an amount of consideration that an operator of the application pays with respect to the provision of the sensing data; and

the specification unit (11), on condition that the amount of consideration required by the provision condition information to be specified is less than or equal to the amount of consideration in the use condition information, is adapted to specify the provision condition information matched with the use condition information, the information management device (1) further comprising a consideration calculation unit (14) that is adapted to calculate, based on: the specification process by the specification unit (11); and the provision condition information and the use condition information that correspond to the sensing data used for transmission by the sensing data delivery unit (13), the use condition information corresponding to the transmission destination address, an amount of consideration that the operator of the application pays with respect to the provision of the sensing data and an amount of consideration that an owner of the sensor (S1 to S5) that has generated the sensing data that is used for the transmission receives.

6. The information management device (1) according to any one of claims 1 to 5, further comprising:

a management information generation unit that is adapted to generate, for each of the applications, by using the provision condition information registered in the provision condition storage unit (101) and the use condition information registered in the use condition storage unit (102), management information obtained by associating the use purpose information indicating the use purpose of the sensing data that the application requires with the sensing data of which use is not restricted against the use purpose;

a management information storage unit that is adapted to store the management information generated by the management information generation unit; and

an information selection unit that is adapted to refer, when receiving a use request of sensing data from any of the applications (2), to the management information stored in the management information storage unit, and to select sensing data to be transmitted to the application.

7. The information management device (1) according to claim 6, further comprising:

a provision contract unit that is adapted to additionally register, when newly receiving a contract request concerning a provision of sensing data, the provision condition information concerning the contract request in the provision condition storage unit (101); and

a use contract unit that is adapted to additionally register, when receiving a contract request that use of new sensing data in the application is desired, the use condition information concerning the contract request in the use condition storage unit (102), wherein

the management information generation unit is adapted to generate the management information at each predetermined timing.

8. The information management device (1) according to claim 6 or 7, further comprising:

a sensing data storage unit that is adapted to store the sensing data provided by the sensor (6); and

a request unit that is adapted to request, if the sensing data that the information selection unit selects as the sensing data to be transmitted to the application is not stored in the sensing data storage unit, sensing data to a corresponding sensor (6).

9. The information management device (1) according to any one of claims 6 to 8, wherein:

the provision condition information, for each sensing data, includes a use fee and a recognition degree of the sensing data;

the use condition information includes a priority with respect to the use fee and the recognition degree; and

the information selection unit is adapted to select sensing data to be transmitted to the application according to the priority included in the use condition information.

10. A network system comprising:

a plurality of sensors (S1 to S5) adapted to generate sensing data;

a plurality of applications (2) adapted to require the sensing data; and

the information management device (1) according to any one of claims 1 to 9 that is adapted to relay the sensing data between the sensors (S1 to S5) and the applications (2), the sensors (S1 to S5), the applications (2), and the information management device (1) being connected in a communicable manner.

11. An information management method executed by a computer (1), the method comprising:

a first step (S51 to S55) of registering in a provision condition storage unit (101), for each sensor (S1 to S5), provision condition information of sensing data generated by a sensor (S1 to S5) in association with identification information of the sensor;

a second step (S61 to S67) of registering in a use condition storage unit (102), for each application that requires use of the sensing data, use condition information of the sensing data required by an application in association with an address of a transmission destination of the sensing data;

a third step (S41 to S48) of acquiring through communication the sensing data generated by the sensor (S1 to S5) registered in the provision condition storage unit (101);

a fourth step (S1 to S26) of specifying the provision condition information matched with the use condition information by searching the provision condition storage unit (101) for each piece of the use condition information registered in the use condition storage unit (102); and

**EP 2 743 883 B1**

a fifth step (S31 to S35) of performing a transmission process in which, to a transmission destination address corresponding to the use condition information of which matched provision condition information has been specified in the fourth step, the sensing data that has been acquired in the third step through communication with the sensor (S1 to S5) having the identification information in association with the matched provision condition information is transmitted, **characterized in that**
the provision condition information includes restriction information indicating use restriction of the sensing data against a use purpose of the sensing data generated by the sensor (S1 to S5), the restriction information including either

> a usable application type indicating a type of an application for which use of the sensing data is permitted and an attribute of a user indicating a user who is permitted to use the sensing data or
> a non-usable application type indicating a type of an application for which use of the sensing data is not permitted and an attribute of a user indicating a user who is not permitted

> to use the sensing data, wherein the restriction information is set by a provider of the sensing data when closing a contract concerning a provision of information,
> the use condition information includes use purpose information indicating a use purpose of required sensing data, the use purpose information including a user ID which identifies the user and an use application type which is the type of an application for which the user uses the provided sensing data, wherein the use purpose information is set by the user when closing a contract concerning use of information.

**12.** An information management program for causing, when run on a computer (1), the computer (1) to execute steps of the method according to claim 11.

**Patentansprüche**

**1.** Informationsverwaltungsvorrichtung (1), umfassend:

eine Bereitstellungsbedingungsspeichereinheit (101), in der für jeden Sensor (S1 bis S5) Bereitstellungsbedingungsinformationen zu Erfassungsdaten, die von einem Sensor (S1 bis S5) erzeugt werden, in Verbindung mit Identifikationsinformationen zu dem Sensor (S1 bis S5) registriert sind;
eine Nutzungsbedingungsspeichereinheit (102), in der für jede Anwendung (2), die die Nutzung der Erfassungsdaten erfordert, Nutzungsbedingungsinformationen zu den Erfassungsdaten, die für eine Anwendung erforderlich sind, in Verbindung mit einer Adresse eines Übertragungsziels der Erfassungsdaten registriert sind;
eine Erfassungsdatenbeschaffungseinheit (10), die dazu eingerichtet ist, mittels Kommunikation die Erfassungsdaten zu beschaffen, die von dem Sensor (S1 bis S5) erzeugt werden, der in der Bereitstellungsbedingungsspeichereinheit (101) registriert ist;
eine Spezifizierungseinheit (11), die dazu eingerichtet ist, durch Durchsuchen der Bereitstellungsbedingungsspeichereinheit (101) nach allen Nutzungsbedingungsinformation, die in der Nutzungsbedingungsspeichereinheit (102) registriert sind, die mit den Nutzungsbedingungsinformationen abgestimmten Bereitstellungsbedingungsinformationen zu spezifizieren; und
eine Erfassungsdatenzustellungseinheit (13), die dazu eingerichtet ist, einen Übertragungsprozess durchzuführen, bei dem die Erfassungsdaten, die die Erfassungsdatenbeschaffungseinheit (10) mittels Kommunikation mit dem Sensor (S1 bis S5), der über die Identifikationsinformationen verfügt, beschafft hat, in Verbindung mit den auf die Nutzungsbedingungsinformationen abgestimmten Bereitstellungsbedingungsinformationen zu einer Übertragungszieladresse übertragen werden, die den Nutzungsbedingungsinformationen entspricht, mit denen die Spezifizierungseinheit (11) die abgestimmten Bereitstellungsbedingungsinformationen spezifiziert hat, **dadurch gekennzeichnet, dass** die Bereitstellungsbedingungsinformationen Einschränkungsinformationen beinhalten, die eine Nutzungseinschränkung der Erfassungsdaten gegenüber einem Nutzungszweck der von dem Sensor (S1 bis S5) erzeugten Daten angeben, wobei die Einschränkungsinformationen entweder einen verwendbaren Anwendungstyp, der einen Typ einer Anwendung angibt, für den die Verwendung der Erfassungsdaten gestattet ist, und ein Attribut eines Benutzers, das einen Benutzer angibt, dem es gestattet ist, die Erfassungsdaten zu verwenden, oder einen nicht verwendbaren Anwendungstyp beinhalten, der einen Typ einer Anwendung angibt, für den die Verwendung der Erfassungsdaten nicht gestattet ist,
und ein Attribut eines Benutzers, das einen Benutzer angibt, dem es nicht gestattet ist, die Erfassungsdaten zu verwenden, wobei die Einschränkungsinformationen von einem Anbieter der Erfassungsdaten festlegbar sind, wenn ein Vertrag über die Bereitstellung von Informationen geschlossen wird, die Nutzungsbedingungsinformationen Nutzungszweckinformationen beinhalten, die einen Nutzungszweck von erforderlichen Erfassungsdaten angeben, wobei die Nutzungszweckinformationen eine Benutzer-ID, die den Benutzer identifizieren, und einen Nutzungsanwendungstyp beinhalten, bei dem es sich um den Typ einer Anwendung handelt, für die der Benutzer die bereitgestellten Erfassungsdaten verwendet, wobei die Nutzungszweckinformationen vom Benutzer festlegbar sind, wenn ein Vertrag über die Verwendung von Informationen geschlossen wird.

2. Informationsverwaltungsvorrichtung (1) nach Anspruch 1, wobei
die Bereitstellungsbedingungsinformationen einen Informationstyp und Positionsinformationen eines Erfassungszielbereichs der von dem Sensor (S1 bis S5) erzeugten Daten beinhalten und die Nutzungsbedingungsinformationen einen Informationstyp und Positionsinformationen eines
Erfassungszielbereichs der erforderlichen Erfassungsdaten beinhalten.

3. Informationsverwaltungsvorrichtung (1) nach Anspruch 1 oder 2, ferner umfassend:

eine virtuelle Sensorverwaltungsinformationsspeichereinheit (105), die dazu eingerichtet ist, Verwaltungsinformationen zu registrieren, wobei die Verwaltungsinformationen beinhalten:

die Identifikationsinformationen der Sensoren, die kombiniert werden, um durch Kombinieren einer Vielzahl der Sensoren unter den Sensoren (S1 bis S5), die in der Bereitstellungsbedingungsspeichereinheit (101) registriert sind, und Integrieren der Erfassungsdaten von der Vielzahl der Sensoren (S1 bis S5) einen virtuellen Sensor festzulegen, der neue Erfassungsdaten erzeugt;
eine Definition eines Prozesses der Integration; und den Informationstyp der durch die Integration erzeugten Erfassungsdaten; und
eine Datenverarbeitungseinheit (12), die dazu eingerichtet ist, durch Integrieren auf Basis der Definition in den Verwaltungsinformationen, die in der virtuellen Sensorverwaltungsinformationsspeichereinheit (105) registriert sind, der Erfassungsdaten, die von der Erfassungsdatenbeschaffungseinheit (10) mit Bezug auf die Vielzahl der Sensoren (S1 bis S5) beschafft werden, die den Identifikationsinformationen in den Verwaltungsinformationen entsprechen, die in der virtuellen Sensorverwaltungsinformationsspeichereinheit (105) registriert sind, Erfassungsdaten des virtuellen Sensors zu beschaffen, entsprechend den Verwaltungsinformationen, wobei die Spezifizierungseinheit (11) dazu eingerichtet ist, durch Durchsuchen der Bereitstellungsbedingungsspeichereinheit (101) und der virtuellen Sensorverwaltungsinformationsspeichereinheit (105) auf Basis der Nutzungsbedingungsinformationen, die in der Nutzungsbedingungsspeichereinheit (102) registriert sind, einen virtuellen Sensor zu spezifizieren, der Erfassungsdaten eines Typs erzeugt, die mit den Nutzungsbedingungsinformationen abgestimmt sind, durch eine Kombination der Sensoren (S1 bis S5), deren Positionsinformationen des Erfassungszielbereichs mit den Nutzungsbedingungsinformationen abgestimmt sind;
und
die Erfassungsdatenzustellungseinheit (13) dazu eingerichtet ist, die von der Datenverarbeitungseinheit (12) beschafften Erfassungsdaten auf Basis der Verwaltungsinformationen des virtuellen Sensors, der durch die Spezifizierungseinheit (11) spezifiziert ist, zur Übertragungszieladresse zu übertragen, die den zu spezifizierenden Nutzungsbedingungsinformationen entspricht.

4. Informationsverwaltungsvorrichtung (1) nach einem der Ansprüche 1 bis 3, wobei:

eine Nutzungsbedingung, die in der Nutzungsbedingungsspeichereinheit (102) registriert ist, Informationen beinhaltet, die einen Zeitpunkt angeben, zu dem die Erfassungsdaten beschafft werden; die Spezifizierungseinheit (11) unter der Bedingung, dass die zu verarbeitenden Nutzungsbedingungsinformationen den Zeitpunkt erreichen, zu dem die Erfassungsdaten beschafft werden, während ein Prozess durchlaufen wird, bei dem sich die Abfolge der zu verarbeitenden Nutzungsbedingungsinformationen ändert, dazu eingerichtet ist, die Bereitstellungsbedingungsinformationen zu spezifizieren, die mit den Nutzungsbedingungsinformationen abgestimmt sind; und
die Erfassungsdatenzustellungseinheit (13) dazu eingerichtet ist, die Erfassungsdaten zu einer Übertragungsadresse zu übertragen, die den Nutzungsbedingungsinformationen entspricht, die jedes Mal zu spezifizieren sind, wenn ein Spezifizierungsprozess durch die Spezifizierungseinheit (11) endet, wobei der Spezifizierungsprozess mit Bezug auf einen Teil der Nutzungsbedingungsinformationen durchgeführt wird, die in der Nutzungsbedingungsspeichereinheit (102) registriert sind.

5. Informationsverwaltungsvorrichtung (1) nach einem der Ansprüche 1 bis 4, wobei:

die Bereitstellungsbedingungsinformationen, die in der Bereitstellungsbedingungsspeichereinheit (101) registriert sind, Identifikationsinformationen eines Anbieters von Erfassungsdaten und Informationen beinhalten, die einen Vergütungsbetrag angeben, den der Anbieter mit Bezug auf eine Bereitstellung der Erfassungsdaten zu empfangen wünscht;

die Nutzungsbedingungsinformationen, die in der Nutzungsbedingungsspeichereinheit (102) registriert sind, Identifikationsinformationen einer Anwendung beinhalten, die die Bereitstellung von Erfassungsdaten empfängt, sowie Informationen, die einen Vergütungsbetrag angeben, den ein Betreiber der Anwendung mit Bezug auf die Bereitstellung der Erfassungsdaten zahlt; und

die Spezifizierungseinheit (11) unter der Bedingung, dass der Vergütungsbetrag, der durch die zu spezifizierenden Bereitstellungsbedingungsinformationen gefordert wird, geringer als der Vergütungsbetrag in den Nutzungsbedingungsinformationen oder diesem gleich ist, dazu eingerichtet ist, die mit den Nutzungsbedingungsinformationen abgestimmten Bereitstellungsbedingungsinformationen zu spezifizieren, wobei die Informationsverwaltungsvorrichtung (1) ferner eine Vergütungsberechnungseinheit (14) umfasst, die dazu eingerichtet ist, auf Basis des Spezifizierungsprozesses der Spezifizierungseinheit (11) und der Bereitstellungsbedingungsinformationen und der Nutzungsbedingungsinformationen, die den Erfassungsdaten entsprechen, die für die Übertragung durch die Erfassungsdatenzustellungseinheit (13) verwendet werden, wobei die Nutzungsbedingungsinformationen der Übertragungszieladresse entsprechen, einen Vergütungsbetrag zu berechnen, den der Betreiber der Anwendung mit Bezug auf die Bereitstellung der Erfassungsdaten zahlt, und einen Vergütungsbetrag, den ein Eigentümer des Sensors (S1 bis S5) empfängt, der die Erfassungsdaten erzeugt hat, die für die Übertragung verwendet werden.

6. Informationsverwaltungsvorrichtung (1) nach einem der Ansprüche 1 bis 5, ferner umfassend:

eine Verwaltungsinformationserzeugungseinheit, die dazu eingerichtet ist, durch Verwenden der in der Bereitstellungsbedingungsspeichereinheit (101) registrierten Bereitstellungsbedingungsinformationen und der in der Nutzungsbedingungsspeichereinheit (102) registrierten Nutzungsbedingungsinformationen für jede der Anwendungen Verwaltungsinformationen zu erzeugen, die durch Verknüpfen der Nutzungszweckinformationen, die den Nutzungszweck der Erfassungsdaten angeben, den die Anwendung erfordert, mit den Erfassungsdaten, deren Verwendung gegenüber dem Nutzungszweck nicht eingeschränkt ist, erhalten werden;

eine Verwaltungsinformationsspeichereinheit, die dazu eingerichtet ist, die Verwaltungsinformationen, die von der Verwaltungsinformationserzeugungseinheit erzeugt werden, zu speichern; und

eine Informationsauswahleinheit, die dazu eingerichtet ist, wenn sie von einer der Anwendungen (2) eine Nutzungsanforderung für Erfassungsdaten empfängt, die in der Verwaltungsinformationsspeichereinheit gespeicherten Verwaltungsdaten zu referenzieren und zu der Anwendung zu übertragende Erfassungsdaten auszuwählen.

7. Informationsverwaltungsvorrichtung (1) nach Anspruch 6, ferner umfassend:

eine Bereitstellungsvertragseinheit, die, wenn eine Vertragsanforderung, die sich auf eine Bereitstellung von Erfassungsdaten bezieht, neu empfangen wird, dazu eingerichtet ist, die Bereitstellungsbedingungsinformationen, die sich auf die Vertragsanforderung beziehen, zusätzlich in der Bereitstellungsbedingungsspeichereinheit (101) zu registrieren; und

eine Nutzungsvertragseinheit, die, wenn eine Vertragsanforderung empfangen wird, dass eine Verwendung neuer Erfassungsdaten in der Anwendung gewünscht ist, dazu eingerichtet ist, die Nutzungsbedingungsinformationen, die sich auf die Vertragsanforderung beziehen, zusätzlich in der Nutzungsbedingungsspeichereinheit (102) zu registrieren, wobei die Verwaltungsinformationserzeugungseinheit dazu eingerichtet ist, zu jedem vorbestimmten Zeitpunkt die Verwaltungsinformationen zu erzeugen.

8. Informationsverwaltungsvorrichtung (1) nach Anspruch 6 oder 7, ferner umfassend:

eine Erfassungsdatenspeichereinheit, die dazu eingerichtet ist, die Erfassungsdaten, die von dem Sensor (6) bereitgestellt werden, zu speichern; und

eine Anforderungseinheit, die dazu eingerichtet ist, wenn die Erfassungsdaten, die die Informationsauswahleinheit als die zu der Anwendung zu übertragenden Erfassungsdaten auswählt, in der Erfassungsdatenspeichereinheit nicht gespeichert sind, Erfassungsdaten zu einem entsprechenden Sensor (6) anzufordern.

9. Informationsverwaltungsvorrichtung (1) nach einem der Ansprüche 6 bis 8, wobei:

die Bereitstellungsbedingungsinformationen für alle Erfassungsdaten eine Nutzungsgebühr und einen Erkennungsgrad der Erfassungsdaten beinhalten;

die Nutzungsbedingungsinformationen mit Bezug auf die Nutzungsgebühr und den Erkennungsgrad eine Priorität beinhalten, und die Informationsauswahleinheit dazu eingerichtet ist, zu der Anwendung zu übertragende Erfassungsdaten gemäß der Priorität auszuwählen, die in den Nutzungsbedingungsinformationen beinhaltet ist.

10. Netzwerksystem, umfassend:

eine Vielzahl von Sensoren (S1 bis S5), die dazu eingerichtet sind, Erfassungsdaten zu erzeugen;
eine Vielzahl von Anwendungen (2), die dazu eingerichtet sind, die Erfassungsdaten anzufordern; und
die Informationsverwaltungsvorrichtung (1) gemäß einem der Ansprüche 1 bis 9, die dazu eingerichtet ist, die Erfassungsdaten zwischen den Sensoren (S1 bis S5) und den Anwendungen (2) weiterzuleiten, wobei die Sensoren (S1 bis S5), die Anwendungen (2) und die Informationsverwaltungsvorrichtung (1) auf kommunizierbare Weise miteinander verbunden sind.

11. Informationsverwaltungsverfahren, das von einem Computer (1) ausgeführt wird, wobei das Verfahren umfasst:

einen ersten Schritt (S51 bis S55) eines Registrierens für jeden Sensor (S1 bis S5) von Bereitstellungsbedingungsinformationen zu Erfassungsdaten, die von einem Sensor (S1 bis S5) erzeugt werden, in Verbindung mit Identifikationsinformationen zum Sensor in einer Bereitstellungsbedingungsspeichereinheit (101);
einen zweiten Schritt (S61 bis S67) eines Registrierens für jede Anwendung, die die Nutzung der Erfassungsdaten erfordert, von Nutzungsbedingungsinformationen zu den Erfassungsdaten, die für eine Anwendung erforderlich sind, in Verbindung mit einer Adresse eines Übertragungsziels der Erfassungsdaten in einer Nutzungsbedingungsspeichereinheit (102);
einen dritten Schritt (S41 bis S48) eines Beschaffens mittels Kommunikation der Erfassungsdaten, die von dem Sensor (S1 bis S5) erzeugt werden, der in der Bereitstellungsbedingungsspeichereinheit (101) registriert ist;
einen vierten Schritt (S1 bis S26) eines Spezifizierens der mit den Nutzungsbedingungsinformationen abgestimmten Bereitstellungsbedingungsinformationen durch Durchsuchen der Bereitstellungsbedingungsspeichereinheit (101) nach allen Nutzungsbedingungsinformationen, die in der Nutzungsbedingungsspeichereinheit (102) registriert sind; und
einen fünften Schritt (S31 bis S35) eines Durchführens eines Übertragungsprozesses, bei dem die Erfassungsdaten, die in dem dritten Schritt mittels Kommunikation mit dem Sensor (S1 bis S5) beschafft wurden, der über die Identifikationsinformationen verknüpft mit den abgestimmten Bereitstellungsbedingungsinformationen verfügt, zu einer Übertragungszieladresse übertragen werden, die den Nutzungsbedingungsinformationen entspricht, zu denen im vierten Schritt abgestimmten Bereitstellungsbedingungsinformationen spezifiziert wurden, **dadurch gekennzeichnet, dass** die Bereitstellungsbedingungsinformationen Einschränkungsinformationen beinhalten, die eine Nutzungseinschränkung der Erfassungsdaten gegenüber einem Nutzungszweck der von dem Sensor (S1 bis S5) erzeugten Daten angeben, wobei die Einschränkungsinformationen entweder einen verwendbaren Anwendungstyp, der einen Typ einer Anwendung angibt, für den die Verwendung der Erfassungsdaten gestattet ist, und ein Attribut eines Benutzers, das einen Benutzer angibt, dem es gestattet ist, die Erfassungsdaten zu verwenden, oder einen nicht verwendbaren Anwendungstyp beinhalten, der einen Typ einer Anwendung angibt, für den die Verwendung der Erfassungsdaten nicht gestattet ist, und ein Attribut eines Benutzers, das einen Benutzer angibt, dem es nicht gestattet ist, die Erfassungsdaten zu verwenden, wobei die Einschränkungsinformationen von einem Anbieter der Erfassungsdaten festgelegt werden, wenn ein Vertrag über die Bereitstellung von Informationen geschlossen wird, die Nutzungsbedingungsinformationen Nutzungszweckinformationen beinhalten, die einen Nutzungszweck von erforderlichen Erfassungsdaten angeben, wobei die Nutzungszweckinformationen eine Benutzer-ID, die den Benutzer identifizieren, und einen Nutzungsanwendungstyp beinhalten, bei dem es sich um den Typ einer Anwendung handelt, für die der Benutzer die bereitgestellten Erfassungsdaten verwendet, wobei die Nutzungszweckinformationen vom Benutzer festgelegt werden, wenn ein Vertrag über die Verwendung von Informationen geschlossen wird.

12. Informationsverwaltungsprogramm zum Bewirken, dass, wenn es auf einem Computer (1) ausgeführt wird, der Computer (1) Schritte des Verfahrens nach Anspruch 11 ausführt.

**Revendications**

1. Dispositif de gestion d'information (1) comprenant :

une unité de stockage de conditions de fourniture (101) dans laquelle, pour chaque capteur (S1 à S5), une information de condition de fourniture de données de détection qui sont générées par un capteur (S1 à S5), en association avec une information d'identification du capteur (S1 à S5), est enregistrée ;
une unité de stockage de conditions d'utilisation (102) dans laquelle, pour chaque application (2) requérant l'utilisation des données de détection, une information de condition d'utilisation des données de détection requises par application, en association avec une adresse d'une destination de transmission des données de détection, est enregistrée ,
une unité d'acquisition de données de détection (10) adaptée pour acquérir, par l'intermédiaire d'une communication, les données de détection qui sont générées par le capteur (S1 à S5) enregistrées dans l'unité de stockage de conditions de fourniture (101) ;
une unité de spécification (11) adaptée pour spécifier l'information de condition de fourniture qui correspond à l'information de condition d'utilisation en recherchant, dans l'unité de stockage de conditions de fourniture (101), chaque élément de l'information de condition d'utilisation qui est enregistrée dans l'unité de stockage de conditions d'utilisation (102) ; et
une unité de distribution de données de détection (13) adaptée pour réaliser un processus de transmission selon lequel, jusqu'à une adresse de destination de transmission qui correspond à l'information de condition d'utilisation à l'aide de laquelle l'unité de spécification (11) a spécifié l'information de condition de fourniture en correspondance, les données de détection, que l'unité d'acquisition de données de détection (10) a acquises par l'intermédiaire d'une communication avec le capteur (S1 à S5) qui dispose de l'information d'identification en association avec l'information de condition de fourniture en correspondance avec l'information de condition d'utilisation, sont transmises,
**caractérisé en ce que** :

l'information de condition de fourniture inclut une information de restriction qui indique une restriction d'utilisation des données de détection à l'encontre d'un objectif d'utilisation des données de détection qui sont générées par le capteur (S1 à S5), l'information de restriction incluant :

soit un type d'application utilisable qui indique un type d'une application pour laquelle une utilisation des données de détection est autorisée et un attribut d'un utilisateur qui indique un utilisateur qui est autorisé à utiliser les données de détection,
soit un type d'application non utilisable qui indique un type d'une application pour laquelle une utilisation des données de détection n'est pas autorisée et un attribut d'un utilisateur qui indique un utilisateur qui n'est pas autorisé à utiliser les données de détection, dans lequel :

l'information de restriction peut être paramétrée par un fournisseur des données de détection lors de la conclusion d'un contrat qui concerne une fourniture d'information,
l'information de condition d'utilisation inclut une information d'objectif d'utilisation qui indique un objectif d'utilisation de données de détection requises, l'information d'objectif d'utilisation incluant un identifiant d'utilisateur qui identifie l'utilisateur et un type d'application d'utilisation qui est le type d'une application pour laquelle l'utilisateur utilise les données de détection fournies, dans lequel l'information d'objectif d'utilisation peut être paramétrée par l'utilisateur lors de la conclusion d'un contrat qui concerne l'utilisation de l'information.

2. Dispositif de gestion d'information (1) selon la revendication 1, dans lequel :

l'information de condition de fourniture inclut un type d'information et une information de position d'une zone cible de détection des données de détection qui sont générées par le capteur (S1 à S5), et l'information de condition d'utilisation inclut un type d'information et une information de position d'une zone cible de détection de données de détection requises.

3. Dispositif de gestion d'information (1) selon la revendication 1 ou 2, comprenant en outre :

une unité de stockage d'information de gestion de capteur virtuel (105) qui est adaptée de manière à enregistrer une information de gestion, l'information de gestion incluant :

l'information d'identification des capteurs qui sont combinés de manière à définir un capteur virtuel qui génère de nouvelles données de détection en combinant une pluralité des capteurs pris parmi les capteurs (S1 à S5) qui sont enregistrés dans l'unité de stockage de conditions de fourniture (101) et en intégrant les données de détection qui sont obtenues au moyen de la pluralité des capteurs (S1 à S5) ;

une définition d'un processus d'intégration ; et le type d'information des données de détection qui sont générées par l'intégration ; et

une unité de traitement de données (12) qui est adaptée de manière à acquérir des données de détection du capteur virtuel qui correspond à l'information de gestion en intégrant, sur la base de la définition dans l'information de gestion qui est enregistrée dans l'unité de stockage d'information de gestion de capteur virtuel (105), les données de détection qui sont acquises par l'unité d'acquisition de données de détection (10) en relation avec la pluralité des capteurs (S1 à S5) correspondant à l'information d'identification dans l'information de gestion qui est enregistrée dans l'unité de stockage d'information de gestion de capteur virtuel (105), dans lequel :

l'unité de spécification (11) est adaptée de manière à spécifier, en effectuant une recherche dans l'unité de stockage de conditions de fourniture (101) et dans l'unité de stockage d'information de gestion de capteur virtuel (105), sur la base de l'information de condition d'utilisation qui est enregistrée dans l'unité de stockage de conditions d'utilisation (102), un capteur virtuel qui génère des données de détection d'un type qui correspond à l'information de condition d'utilisation au moyen d'une combinaison des capteurs (S1 à S5) dont l'information de position de la zone cible de détection correspond à l'information de condition d'utilisation ; et

l'unité de distribution de données de détection (13) est adaptée de manière à transmettre les données de détection qui sont acquises par l'unité de traitement de données (12) sur la base de l'information de gestion du capteur virtuel qui est spécifié par l'unité de spécification (11) jusqu'à l'adresse de destination de transmission qui correspond à l'information de condition d'utilisation qui est destinée à être spécifiée.

4. Dispositif de gestion d'information (1) selon l'une quelconque des revendications 1 à 3, dans lequel :

une condition d'utilisation qui est enregistrée dans l'unité de stockage de conditions d'utilisation (102) inclut une information qui indique un cadencement auquel les données de détection sont acquises ;

l'unité de spécification (11) est adaptée de manière à spécifier l'information de condition de fourniture qui correspond à l'information de condition d'utilisation avec pour condition le fait que l'information de condition d'utilisation qui est destinée à être traitée atteigne le cadencement auquel les données de détection sont acquises pendant le déroulement d'un processus selon lequel l'information de condition d'utilisation qui est destinée à être traitée est modifiée en séquence ; et

l'unité de distribution de données de détection (13) est adaptée de manière à transmettre les données de détection jusqu'à une adresse de transmission qui correspond à l'information de condition d'utilisation qui est destinée à être spécifiée chaque fois qu'un processus de spécification qui est réalisé par l'unité de spécification (11) se termine, le processus de spécification étant réalisé en relation avec un élément de l'information de condition d'utilisation qui est enregistrée dans l'unité de stockage de conditions d'utilisation (102).

5. Dispositif de gestion d'information (1) selon l'une quelconque des revendications 1 à 4, dans lequel :

l'information de condition de fourniture qui est enregistrée dans l'unité de stockage de conditions de fourniture (101) inclut une information d'identification d'un fournisseur de données de détection, et une information qui indique une valeur de considération que le fournisseur souhaite recevoir en relation avec une fourniture des données de détection ;

l'information de condition d'utilisation qui est enregistrée dans l'unité de stockage de conditions d'utilisation (102) inclut une information d'identification d'une application qui reçoit la fourniture de données de détection, et une information qui indique une valeur de considération qu'un opérateur de l'application paie en relation avec la fourniture des données de détection ; et

l'unité de spécification (11), avec pour condition que la valeur de considération qui est requise par l'information de condition de fourniture qui est destiné à être spécifiée est inférieure ou égale à la valeur de considération dans l'information de condition d'utilisation, est adaptée de manière à spécifier l'information de condition de fourniture qui correspond à l'information de condition d'utilisation, le dispositif de gestion d'information (1) comprenant en outre une unité de calcul de considération (14) qui est adaptée de manière à calculer, sur la base du processus de spécification qui est réalisé par l'unité de spécification (11) ; et sur la base de l'information de condition de fourniture et de l'information de condition d'utilisation qui correspondent aux données de détection qui sont utilisées pour une transmission par l'unité de distribution de données de détection (13), sur la base de l'information de condition d'utilisation qui correspond à l'adresse de destination de transmission, une valeur de considération que l'opérateur de l'application paie en relation avec la fourniture des données de détection et une valeur de considération qu'un propriétaire du capteur (S1 à S5) qui a généré les données de détection qui sont utilisées pour la transmission reçoit.

6. Dispositif de gestion d'information (1) selon l'une quelconque des revendications 1 à 5, comprenant en outre :

une unité de génération d'information de gestion qui est adaptée de manière à générer, pour chacune des applications, en utilisant l'information de condition de fourniture qui est enregistrée dans l'unité de stockage de conditions de fourniture (101) et l'information de condition d'utilisation qui est enregistrée dans l'unité de stockage de conditions d'utilisation (102), une information de gestion qui est obtenue en associant l'information d'objectif d'utilisation qui indique l'objectif d'utilisation des données de détection dont l'application a besoin avec les données de détection dont l'utilisation n'est pas restreinte à l'encontre de l'objectif d'utilisation ;
une unité de stockage d'information de gestion qui est adaptée de manière à stocker l'information de gestion qui est générée par l'unité de génération d'information de gestion ; et
une unité de sélection d'information qui est adaptée de manière à se référer, lors de la réception d'une requête d'utilisation de données de détection qui provient de l'une quelconque des applications (2), à l'information de gestion qui est stockée dans l'unité de stockage d'information de gestion, et de manière à sélectionner des données de détection qui sont destinées à être transmises à l'application.

7. Dispositif de gestion d'information (1) selon la revendication 6, comprenant en outre :

une unité de contrat de fourniture qui est adaptée de manière à enregistrer de façon additionnelle, lors d'une nouvelle réception d'une requête de contrat qui concerne une fourniture de données de détection, l'information de condition de fourniture qui concerne la requête de contrat dans l'unité de stockage de conditions de fourniture (101) ; et
une unité de contrat d'utilisation qui est adaptée de manière à enregistrer de façon additionnelle, lors de la réception d'une requête de contrat consistant en ce que l'utilisation de nouvelles données de détection dans l'application est souhaitée, l'information de condition d'utilisation qui concerne la requête de contrat dans l'unité de stockage de conditions d'utilisation (102), dans lequel :

l'unité de génération d'information de gestion est adaptée de manière à générer l'information de gestion à chaque cadencement prédéterminé.

8. Dispositif de gestion d'information (1) selon la revendication 6 ou 7, comprenant en outre :

une unité de stockage de données de détection qui est adaptée de manière à stocker les données de détection qui sont fournies par le capteur (6) ; et
une unité de requête qui est adaptée de manière à demander en requête, si les données de détection que l'unité de sélection d'information sélectionne en tant que données de détection qui sont destinées à être transmises à l'application ne sont pas stockées dans l'unité de stockage de données de détection, des données de détection à un capteur correspondant (6).

9. Dispositif de gestion d'information (1) selon l'une quelconque des revendications 6 à 8, dans lequel :

l'information de condition de fourniture, pour chaque jeu de données de détection, inclut un tarif d'utilisation et un degré de reconnaissance des données de détection ;
l'information de condition d'utilisation inclut une priorité en relation avec le tarif d'utilisation et le degré de reconnaissance ; et
l'unité de sélection d'information est adaptée de manière à sélectionner des données de détection qui sont destinées à être transmises à l'application en fonction de la priorité qui est incluse dans l'information de condition d'utilisation.

10. Système de réseau, comprenant :

une pluralité de capteurs (S1 à S5) qui sont adaptés de manière à générer des données de détection ;

une pluralité d'applications (2) qui sont adaptées de manière à avoir besoin des données de détection ; et le dispositif de gestion d'information (1) selon l'une quelconque des revendications 1 à 9 qui est adapté de manière à relayer les données de détection entre les capteurs (S1 à S5) et les applications (2), les capteurs (S1 à S5), les applications (2) et le dispositif de gestion d'information (1) étant connectés de sorte à pouvoir communiquer.

11. Procédé de gestion d'information qui est exécuté par un ordinateur (1), le procédé comprenant :

une première étape (S51 à S55) qui consiste à enregistrer, dans une unité de stockage de conditions de fourniture (101), pour chaque capteur (S1 à S5), une information de condition de fourniture de données de détection qui sont générées par un capteur (S1 à S5) en association avec une information d'identification du capteur ;

une deuxième étape (S61 à S67) qui consiste à enregistrer, dans une unité de stockage de conditions d'utilisation (102), pour chaque application qui a besoin d'utiliser les données de détection, une information de condition d'utilisation des données de détection requises par une application en association avec une adresse d'une destination de transmission des données de détection ;

une troisième étape (S41 à S48) qui consiste à acquérir, par l'intermédiaire d'une communication, les données de détection qui sont générées par le capteur (S1 à S5) qui est enregistré dans l'unité de stockage de conditions de fourniture (101) ;

une quatrième étape (S1 à S26) qui consiste à spécifier l'information de condition de fourniture qui correspond à l'information de condition d'utilisation en recherchant, dans l'unité de stockage de conditions de fourniture (101), chaque élément de l'information de condition d'utilisation qui est enregistrée dans l'unité de stockage de conditions d'utilisation (102) ; et

une cinquième étape (S31 à S35) qui consiste à réaliser un processus de transmission selon lequel, jusqu'à une adresse de destination de transmission qui correspond à l'information de condition d'utilisation dont l'information de condition de fourniture en correspondance a été spécifiée au niveau de la quatrième étape, les données de détection, qui ont été acquises au niveau de la troisième étape par l'intermédiaire d'une communication avec le capteur (S1 à S5) qui dispose de l'information d'identification en association avec l'information de condition de fourniture en correspondance, sont transmises,

**caractérisé en ce que** :

l'information de condition de fourniture inclut une information de restriction qui indique une restriction d'utilisation des données de détection à l'encontre d'un objectif d'utilisation des données de détection qui sont générées par le capteur (S1 à S5), l'information de restriction incluant :

soit un type d'application utilisable qui indique un type d'une application pour laquelle une utilisation des données de détection est autorisée et un attribut d'un utilisateur qui indique un utilisateur qui est autorisé à utiliser les données de détection,

soit un type d'application non utilisable qui indique un type d'une application pour laquelle une utilisation des données de détection n'est pas autorisée et un attribut d'un utilisateur qui indique un utilisateur qui n'est pas autorisé à utiliser les données de détection, dans lequel :

l'information de restriction est paramétrée par un fournisseur des données de détection lors de la conclusion d'un contrat qui concerne la fourniture de l'information,

l'information de condition d'utilisation inclut une information d'objectif d'utilisation qui indique un objectif d'utilisation de données de détection requises, l'information d'objectif d'utilisation incluant un identifiant d'utilisateur qui identifie l'utilisateur et un type d'application d'utilisation qui est le type d'une application pour laquelle l'utilisateur utilise les données de détection fournies, dans lequel l'information d'objectif d'utilisation est paramétrée par l'utilisateur lors de la conclusion d'un contrat qui concerne l'utilisation de l'information.

12. Programme de gestion d'information pour amener, lorsqu'il est exécuté sur un ordinateur (1), l'ordinateur (1) à mettre en oeuvre des étapes du procédé selon la revendication 11.

FIG.1

## FIG.2

| ITEM | ITEM VALUE | |
|---|---|---|
| SENSOR NUMBER | VS001 | INFORMATION FOR SPECIFYING REAL SENSOR |
| IP ADDRESS | 123.456.789.012 | |
| CONTRACT NUMBER | SC002 | |
| SENSING DATA TYPE | PERSON, POSITION, TIME, AND ID | PROVISION CONDITION j INFORMATION |
| POSITION OF SENSING AREA | VICINITY OF KEFUKU ARASHIYAMA STATION (LATITUDE 35.0515, LONGITUDE 135.678) | |
| SENSING PERIOD | 60 SECONDS | |
| RELIABILITY DEGREE OF SENSING DATA | 80% | |
| CONSIDERATION OF SENSING DATA | 100 YEN/CASE | |
| PURPOSE TO ALLOW USE | WATCH, SECURITY, MARKETING, PLACE SAVING GAME | |

EP 2 743 883 B1

## FIG.3

| ITEM | ITEM VALUE | |
|---|---|---|
| APPLICATION NUMBER | USER002 | INFORMATION FOR SPECIFYING APPLICATION |
| IP ADDRESS | 456.789.012.345 | |
| CONTRACT NUMBER | UC005 | |
| SENSING DATA TYPE | PERSON, POSITION, TIME, AND ID | USE CONDITION INFORMATION |
| POSITION OF SENSING AREA | VICINITY OF KEFUKU ARASHIYAMA STATION (LATITUDE 35.01, LONGITUDE 135.67) | |
| SENSING PERIOD | WITHIN 200 SECONDS | |
| RELIABILITY DEGREE OF SENSING DATA | 80% | |
| CONSIDERATION OF SENSING DATA | 150 YEN/CASE OR LESS | |
| PURPOSE OF SENSING DATA | WATCH, PLACE SAVING GAME | |

EP 2 743 883 B1

# FIG.4

| ITEM | ITEM VALUE | |
|---|---|---|
| APPLICATION NUMBER | USER002 | INFORMATION FOR SPECIFYING APPLICATION |
| IP ADDRESS | 456.789.012.345 | |
| CONTRACT NUMBER | UC005 | |
| SENSING DATA TYPE | POSITIONAL INFORMATION WITH RELIABILITY DATA | USE CONDITION INFORMATION |
| POSITION OF SENSING AREA | VICINITY OF KEFUKU ARASHIYAMA STATION (LATITUDE 35.01, LONGITUDE 135.67) | |
| SENSING PERIOD | WITHIN 200 SECONDS | |
| RELIABILITY DEGREE OF SENSING DATA | 80% AND ABOVE | |
| CONSIDERATION OF SENSING DATA | 150 YEN/CASE OR LESS | |
| PURPOSE OF SENSING DATA | MARKETING | |

EP 2 743 883 B1

FIG.5

SENSING DATA GROUP

EP 2 743 883 B1

**FIG.6A**

| ITEM | ITEM VALUE |
|---|---|
| SENSOR NUMBER | VS001 (VIRTUAL SENSOR U1) |
| SENSOR NUMBER OF CONFIGURED DESCENDANT SENSORS | R002 (REAL SENSOR S2), R004 (REAL SENSOR S4) |
| PROCESSING MODE TO SENSING DATA OF DESCENDANT SENSOR | GENERATION OF POSITIONAL INFORMATION WITH RELIABILITY DATA |

**FIG.6B**

| ITEM | ITEM VALUE |
|---|---|
| SENSOR NUMBER | VS003 (VIRTUAL SENSOR U3) |
| SENSOR NUMBER OF CONFIGURED DESCENDANT SENSORS | VS001 (VIRTUAL SENSOR U1), VS002 (VIRTUAL SENSOR U2) |
| PROCESSING MODE TO SENSING DATA OF DESCENDANT SENSOR | GENERATION OF DATA WITH CONDITION ASSESSMENT REGARDING PLURALITY OF SENSING DATA |

# FIG.7

VELOCITY SENSING

$$V = \frac{P_B - P_A}{T_B - T_A}$$

U

→ VELOCITY V SENSING

TIME $T_A$
POSITION $P_A$

TIME $T_B$
POSITION $P_B$

$S_A$ — REAL SENSOR

REAL SENSOR — $S_B$

OB

# FIG.8

AVERAGING PROCESS

IF $|P_A - P_B| < \delta_P$, $|T_A - T_B| < \delta_T$, then

$P_{av} = (P_A + P_B)/2$

OUTPUT ID, TIME $T_A$,
POSITION $P_A$,
AVERAGE VALUE $P_{av}$

U

TIME $T_A$
POSITION $P_A$
ID

TIME $T_B$
POSITION $P_B$
ID

$S_A$ — REAL SENSOR

REAL SENSOR — $S_B$

OB

# FIG.9

U

CROSS CORRELATION CALCULATION PROCESS

CALCULATE CORRELATION VALUE S*
BETWEEN (P$_{At}$, t) and (P$_{Bt}$, t)
RELIABILITY DEGREE Q=S*/THRESHOLD VALUE

➡ OUTPUT ID, P$_{At}$, P$_{Bt}$, Q

ID
TIME t
POSITION P$_{At}$

S$_A$ — | REAL SENSOR |

ID
TIME t
POSITION P$_{Bt}$

| REAL SENSOR | — S$_B$

OB

EP 2 743 883 B1

# FIG.10

CONTRACT MATCHING PROCESS

S1 SET INITIAL VALUE TO COUNTER k FOR APPLICATION SPECIFICATION

S2 INITIALIZE MATCHING LIST

S3 READ k-TH RECORD FROM SENSING DATA USE CONDITION DB

S4 NEED USE OF SENSING DATA? Y / N

S5 $k \leftarrow k+1$

S6 k > NUMBER OF REGISTRATIONS? N / Y

S7 SET INITIAL VALUE TO COUNTER i FOR REAL SENSOR SPECIFICATION

S8 READ i-TH RECORD FROM SENSING DATA PROVISION CONDITION DB

S9 COLLATE k-TH USE CONDITION INFORMATION WITH i-TH PROVISION CONDITION INFORMATION

S10 MATCH? N / Y

S11 STORE SENSOR NUMBER OF i-TH SENSOR AND PROVISION CONDITION INFORMATION IN MATCHING LIST

S12 $i \leftarrow i+1$

S13 i > NUMBER OF REGISTRATIONS? N / Y

1

2

# FIG.11

# FIG.12

SENSING DATA DELIVERY PROCESS

S31
ACQUIRE PROVISION DESTINATION SENSOR NUMBER, AND APPLICATION NUMBER AND IP ADDRESS OF TRANSMISSION DESTINATION APPLICATION

S32
NOTIFY ACQUISITION REQUEST OF DATA INCLUDING PROVISION DESTINATION SENSOR NUMBER

S33
IS PROVISION OF SENSING DATA RECEIVED?
N
Y

S34
TRANSMIT PROVIDED SENSING DATA TO IP ADDRESS OF TRANSMISSION DESTINATION APPLICATION

S35
CREATION AND STORAGE OF LOG INFORMATION

END

# FIG.13

SENSING DATA PROCESS

S41
RECEPTION OF DATA ACQUISITION REQUEST

S42
SEARCH SENSING DATA MANAGEMENT DB BY PROVISION SOURCE SENSOR NUMBER IN DATA ACQUISITION REQUEST

S43
IS THERE REGISTRATION CORRESPONDING PROVISION SOURCE SENSOR NUMBER?

N

Y

S44
READ LATEST SENSING DATA CORRESPONDING PROVISION SOURCE SENSOR NUMBER AND PROVIDE DATA TO SENSING DATA DELIVERY PROCESSING UNIT

S45
READ MANAGEMENT INFORMATION CORRESPONDING TO PROVISION SOURCE SENSOR NUMBER FROM VIRTUAL SENSOR MANAGEMENT DB

S46
READ LATEST SENSING DATA OF DESCENDANT SENSOR FROM SENSING DATA MANAGEMENT DB

S47
PROCESS LATEST SENSING DATA OF DESCENDANT SENSOR ACCORDING TO PROCESSING MODE

S48
PROVIDE SENSING DATA OF VIRTUAL SENSOR GENERATED BY PROCESS TO SENSING DATA DELIVERY PROCESSING UNIT

END

FIG.14

# FIG.15

NETWORK SYSTEM

| | | |
|---|---|---|
| INFORMATION PROVISION DEVICE | 6 | INFORMATION USE DEVICE | 7 |

INFORMATION PROVISION DEVICE · 6

INFORMATION PROVISION DEVICE · 6

8

INFORMATION USE DEVICE · 7

INFORMATION USE DEVICE · 7

INFORMATION MANAGEMENT DEVICE · 1

# FIG.16

1 : INFORMATION MANAGEMENT DEVICE

PROVIDER CONTRACT DB 53

USER CONTRACT DB 54

MANAGEMENT INFORMATION DB 55

COMMUNICATION UNIT 52

CONTROL UNIT 51

INFORMATION RECORD DB 56

INFORMATION PROVISION DEVICE, INFORMATION USE DEVICE, ETC.

USE HISTORY DB 57

RECOMMENDATION DEGREE MANAGEMENT DB 58

AFFINITY DEGREE MANAGEMENT DB 59

FIG.17

53: PROVIDER CONTRACT DB

| CONTRACT NO | PROVIDER ID | DEVICE TYPE | DEVICE ADDRESS | DEVICE URL | SENSING RANGE (LATITUDE, LONGITUDE) | PASS-WORD | MAINTENANCE REQUEST NOTIFICATION ADDRESS | INFORMATION TYPE | INFOR-MATION STORAGE LOCATION ADDRESS | USABLE APPLICATION TYPE | ATTRIBUTE OF USER WHO CAN USE APPLICATION | RECOGNITION RATE | USE FEE |
|---|---|---|---|---|---|---|---|---|---|---|---|---|---|
| ..... | ......... | AUTOMATIC TICKET GATE | ..... | ..... | LATITUDE (○,○) LONGITUDE (○,○) | ..... | ..... | OD DATA | ...... | • CHILD WATCH • DIGITAL SIGNAGE | INDIVIDUAL | HIGH | ○ YEN/ MB |
| | | | | | | | | NUMBER-OF-PERSONS DATA | ...... | • DIGITAL SIGNAGE | INDIVIDUAL | MEDIUM | ○ YEN/ MB |
| | | | | | | | | PASS DATA | ...... | • TRAIN OPERATION DIAGRAM MANAGEMENT | INDIVIDUAL | LOW | ○ YEN/ MB |
| ..... | ......... | MONITORING INSTRUMENT | ..... | ..... | ..... | ..... | ..... | VIDEO DATA | ...... | • CHILD WATCH | CORPORATION | HIGH | ○ YEN/ MB |
| | | | | | | | | NUMBER-OF-PERSONS DATA | ...... | • AIR CONDITIONING CONTROL | CORPORATION | HIGH | ○ YEN/ MB |
| | | | | | | | | ATTRIBUTE DATA | ...... | • COUPON SERVICE | CORPORATION | MEDIUM | ○ YEN/ MB |
| ..... | ......... | SOUND SENSOR | ..... | ..... | ..... | ..... | ..... | SOUND DATA | ...... | • TICKET GATE CONTROL | INDIVIDUAL | MEDIUM | ○ YEN/ MB |
| | | | | | | | | NUMBER-OF-PERSONS DATA | ...... | • LIGHTING CONTROL | CORPORATION | MEDIUM | ○ YEN/ MB |

EP 2 743 883 B1

# FIG.18

EP 2 743 883 B1

54: USER CONTRACT DB

| CONTRACT NO | USER ID | USE APPLICATION TYPE | INFORMATION TYPE DESIRED TO USE | SENSING RANGE DESIRED TO USE (LATITUDE, LONGITUDE) | PRIORITY | USE RECOGNITION RATE RANGE | USE FEE RANGE |
|---|---|---|---|---|---|---|---|
| ・・・・・・ | ・・・・・・ | CHILD WATCH | VIDEO DATA | LATITUDE (○,○) LONGITUDE (○,○) | COST | HIGH | ○ YEN/MB OR LESS |
| | | DIGITAL SIGNAGE | ATTRIBUTE DATA | ・・・・・・・・・ | COST | LOW AND ABOVE | ○ YEN/MB OR LESS |
| | | | PASS DATA | ・・・・・・・・・ | RECOGNITION RATE | MEDIUM AND ABOVE | ○ YEN/MB OR LESS |
| ・・・・・・ | ・・・・・・ | CHILD WATCH | ATTRIBUTE DATA | ・・・・・・・・・ | RECOGNITION RATE | MEDIUM AND ABOVE | ○ YEN/MB OR LESS |
| | | AIR CONDITIONING CONTROL | NUMBER-OF-PERSONS DATA | ・・・・・・・・・ | COST | HIGH | ○ YEN/MB OR LESS |
| | | COUPON SERVICE | ATTRIBUTE DATA | ・・・・・・・・・ | COST | LOW AND ABOVE | ○ YEN/MB OR LESS |

# FIG.19

EP 2 743 883 B1

55: MANAGEMENT INFORMATION DB

| CONTRACT NO | USER ID | USE APPLICATION TYPE | INFORMATION TYPE DESIRED TO USE | SENSING RANGE (LATITUDE, LONGITUDE) | PRIORITY | INFORMATION STORAGE LOCATION ADDRESS | DEVICE URL | DEVICE STATUS | RECOGNITION RATE | MAINTENANCE REQUEST NOTIFICATION ADDRESS | USE FEE |
|---|---|---|---|---|---|---|---|---|---|---|---|
| ...... | ...... | CHILD WATCH | VIDEO DATA | LATITUDE (○,○) LONGITUDE (○,○) | COST | ...... | ..... | STOP | HIGH | ...... | ○ YEN/MB |
| | | | | | | ...... | ..... | OPERATION | MEDIUM | ...... | ○ YEN/MB |
| | | DIGITAL SIGNAGE | ATTRIBUTE DATA | .......... | COST | ...... | ..... | OPERATION | LOW | ...... | ○ YEN/MB |
| | | | | | | ...... | ..... | ERROR | LOW | ...... | ○ YEN/MB |
| | | | | | | ...... | ..... | OPERATION | LOW | ...... | ○ YEN/MB |
| | | | PASS DATA | .......... | RECOGNITION RATE | ...... | ..... | OPERATION | HIGH | ...... | ○ YEN/MB |
| | | | | | | ...... | ..... | OPERATION | MEDIUM | ...... | ○ YEN/MB |
| ...... | ...... | CHILD WATCH | ATTRIBUTE DATA | .......... | RECOGNITION RATE | ...... | ..... | OPERATION | MEDIUM | ...... | ○ YEN/MB |
| | | | | | | ...... | ..... | OPERATION | MEDIUM | ...... | ○ YEN/MB |
| | | AIR CONDITIONING CONTROL | NUMBER-OF-PERSONS DATA | .......... | COST | ...... | ..... | OPERATION | HIGH | ...... | ○ YEN/MB |
| | | | | | | ...... | ..... | OPERATION | HIGH | ...... | ○ YEN/MB |
| | | COUPON SERVICE | ATTRIBUTE DATA | .......... | COST | ...... | ..... | OPERATION | MEDIUM | ...... | ○ YEN/MB |
| | | | | | | ...... | ..... | OPERATION | MEDIUM | ...... | ○ YEN/MB |
| | | | | | | ...... | ..... | OPERATION | LOW | ...... | ○ YEN/MB |

# FIG.20

56: INFORMATION RECORD DB

| FILE NAME | PASSWORD | CONTRACT NO | PROVIDER ID | INFORMATION STORAGE LOCATION ADDRESS |
|-----------|----------|-------------|-------------|--------------------------------------|
| . . . . . . | . . . . . . . | . . . . . . | . . . . . . | . . . . . . . . . |
| . . . . . . | . . . . . . | . . . . . . | . . . . . . | . . . . . . . . |

# FIG.21

57: USE HISTORY DB

| PROVIDER ID | FILE NAME | INFORMATION STORAGE LOCATION ADDRESS | USE APPLICATION TYPE | ACCESS DATE AND TIME | USER ID |
|---|---|---|---|---|---|
| ...... | ...... | ......... | CHILD WATCH | ...... | ...... |
| | | | DIGITAL SIGNAGE | ...... | ...... |
| | | | CHILD WATCH | ...... | ...... |
| | | | DIGITAL SIGNAGE | ...... | ...... |
| ...... | ...... | ......... | COUPON SERVICE | ...... | ...... |
| | | | COUPON SERVICE | ...... | ...... |
| | | | COUPON SERVICE | ...... | ...... |
| | | | COUPON SERVICE | ...... | ...... |

# FIG.22

58: RECOMMENDATION DEGREE MANAGEMENT DB

| USE APPLICATION TYPE | INFORMATION TYPE | RECOMMENDATION DEGREE |
|---|---|---|
| CHILD WATCH | VIDEO DATA | 0.1 |
| | POSITION DATA | 0.05 |
| DIGITAL SIGNAGE | ATTRIBUTE DATA | · · · · · · |
| | SOUND DATA | · · · · · · |
| COUPON SERVICE | ATTRIBUTE DATA | · · · · · · |
| | NUMBER-OF-PERSONS DATA | · · · · · · |
| | PASS DATA | · · · · · · |

## FIG.23

59: AFFINITY DEGREE MANAGEMENT DB

| USE APPLICATION TYPE | INFORMATION TYPE 1 | INFORMATION TYPE 2 | AFFINITY DEGREE |
|---|---|---|---|
| CHILD WATCH | VIDEO DATA | POSITION DATA | 0.3 |
| | VIDEO DATA | SOUND DATA | 0.05 |
| DIGITAL SIGNAGE | ATTRIBUTE DATA | NUMBER-OF-PERSONS DATA | · · · · · · |
| | PASS DATA | SOUND DATA | · · · · · · |
| COUPON SERVICE | ATTRIBUTE DATA | NUMBER-OF-PERSONS DATA | · · · · · · |
| | NUMBER-OF-PERSONS DATA | PASS DATA | · · · · · · |

# FIG.24

```
        ┌──────────────────────┐
        │  PROVISION CONTRACT  │
        │       PROCESS        │
        └──────────────────────┘
                  │
      ┌───────────┤
      │           ▼
      │      ◇─────────────────◇  S51
      N     PRESENCE OF CONTRACT
      │      CLOSING REQUEST
      └──────◇─────────────────◇
                  │ Y
                  ▼
        ┌──────────────────────────┐  S52
        │  TRANSMIT INPUT SCREEN    │
        │ CONCERNING PROVISION CONTRACT │
        └──────────────────────────┘
                  │
      ┌───────────┤
      │           ▼
      │      ◇─────────────────◇  S53
      N     COMPLETE RECEPTION
      │        OF ALL ITEMS
      └──────◇─────────────────◇
                  │ Y
                  ▼
        ┌──────────────────────┐  S54
        │ REGISTER ITEMS IN PROVIDER │
        │      CONTRACT DB      │
        └──────────────────────┘
                  │
                  ▼
        ┌──────────────────────────┐  S55
        │ TRANSMIT CONTRACT COMPLETION │
        │         SCREEN           │
        └──────────────────────────┘
                  │
                  ▼
            ┌──────────┐
            │  RETURN  │
            └──────────┘
```

# FIG.25

USE CONTRACT PROCESS

S61 — PRESENCE OF CONTRACT CLOSING REQUEST

N

Y

S62 — TRANSMIT INPUT SCREEN CONCERNING USE CONTRACT

S63 — RECEIVE USE APPLICATION TYPE

N

Y

S64 — TRANSMIT RECOMMENDED INFORMATION TYPE, AND COMBINATION OF INFORMATION WITH HIGH AFFINITY DEGREE

S65 — COMPLETE RECEPTION OF ALL ITEMS

N

Y

S66 — REGISTER ITEMS IN USER CONTRACT DB

S67 — TRANSMIT CONTRACT COMPLETION SCREEN

RETURN

## FIG.26

■ APPLICATION TYPE DESIRED TO USE
　　□ DIGITAL SIGNAGE ADVERTISEMENT CONTROL　□ AIR CONDITIONING CONTROL　□ ELECTRIC POWER MANAGEMENT
　　□ SOLAR ELECTRIC GENERATION MANAGEMENT　□ COUPON SERVICE　□ CHILD WATCH　□ OTHERS

EP 2 743 883 B1

# FIG.27

■ APPLICATION TYPE DESIRED TO USE

    □ DIGITAL SIGNAGE ADVERTISEMENT CONTROL   □ AIR CONDITIONING CONTROL   □ ELECTRIC POWER MANAGEMENT
    □ SOLAR ELECTRIC GENERATION MANAGEMENT   □ COUPON SERVICE   ■ CHILD WATCH   □ OTHERS

■ SENSING DATA TYPE DESIRED TO USE

    □ VIDEO DATA □ SOUND DATA  □ OD DATA  □ NUMBER-OF-PERSONS DATA  □ ATTRIBUTE DATA  □ SMILE DEGREE DATA  □ OTHERS

---

■ SENSING RANGE   [ INPUT FROM MAP ]

LATITUDE [_____] ~ [_____]     LONGITUDE [_____] ~ [_____]

■ SENSOR USE FEE                ■ PRIORITY ATTRIBUTE

[_____] WITHIN ○ YEN/MB       [_____]

---

☆ RECOMMENDED SENSING DATA

- FREQUENTLY USED SENSING DATA       · FREQUENTLY USED COMBINATION
  - VIDEO DATA                   · VIDEO DATA + SOUND DATA
  - SOUND DATA                 · VIDEO DATA + ATTRIBUTE DATA
  - ATTRIBUTE DATA
  - OD DATA

EP 2 743 883 B1

# FIG.28

```
        MANAGEMENT INFORMATION DB
            UPDATE PROCESS
                  │
                  ▼                    S71
        ┌─────────────────────┐
        │  SELECT USER FROM USER │
        │     CONTRACT DB        │
        └─────────────────────┘
                  │
                  ▼                    S72
        ┌─────────────────────────┐
        │ SELECT USE APPLICATION TYPE OF │
        │      SELECTED USER        │
        └─────────────────────────┘
                  │
                  ▼                    S73
        ┌─────────────────────────┐
        │   SEARCH CORRESPONDING    │
        │ INFORMATION FROM PROVIDER │
        │       CONTRACT DB         │
        └─────────────────────────┘
                  │
                  ▼                    S74
        ┌─────────────────────────┐
        │   REGISTER INFORMATION IN  │
        │ MANAGEMENT INFORMATION DB │
        └─────────────────────────┘
                  │
                  ▼                    S75
       N  ◇  COMPLETE ALL USE  ◇
          ◇ APPLICATION TYPES ◇
                  │ Y
                  ▼                    S76
       N  ◇  COMPLETE ALL USERS ◇
                  │ Y
                  ▼
               END
```

## FIG.29

```
        ┌─────────────────────────┐
        │ INFORMATION USE PROCESS │
        └─────────────────────────┘
                    │
                    ▼
             ╱─────────────╲  S81      N
            ╱ PRESENCE OF USE╲──────────┐
            ╲ REQUEST OF INFORMATION╱   │
             ╲─────────────╱            │
                  │ Y      S82          │
                  ▼                     │
        ┌─────────────────────┐         │
        │  SEARCH MANAGEMENT   │         │
        │   INFORMATION DB     │         │
        └─────────────────────┘         │
                  │
                  ▼
           ╱──────────────╲  S83    N
          ╱ PRESENCE OF USABLE╲──────────────────────────┐
          ╲   INFORMATION    ╱                            │
           ╲──────────────╱                               │
                  │ Y                                      │
                  ▼                                        │
           ╱──────────────╲  S84    N                     │
          ╱  PRESENCE OF   ╲──────────────────┐           │
          ╱ MULTIPLE PIECES OF USABLE╲        │           │
          ╲   INFORMATION  ╱                  │           │
           ╲──────────────╱                   ▼           │
              │ Y    S85            ┌──────────────────┐  │
              ▼                     │ SELECT AS INFORMATION TO│
   ┌─────────────────────┐         │     BE USED      │ S86 │
   │ SELECT INFORMATION TO BE│     └──────────────────┘  │
   │ USED BASED ON PRIORITY  │              │            │
   └─────────────────────┘                  │            │
              │◄──────────────────────────────┘            │
              ▼                                            │
       ╱──────────────╲  S87    N                         │
      ╱ PRESENCE OF SAVED╲──────────────────┐             │
      ╲   INFORMATION   ╱                    │             │
       ╲──────────────╱                      ▼             │
          │ Y              ┌────────────────────────────┐ │
          │                │ REQUEST TRANSMISSION OF      │ │
          │                │ INFORMATION TO TARGET INFORMATION│ S88
          │                │ PROVISION DEVICE            │ │
          │                └────────────────────────────┘ │
          │                         │                      │
          │                         ▼                      │
          │                  ╱──────────────╲  S89   N     │
          │◄─────────────────╱ RECEIVE INFORMATION╲────────┤
          │                  ╲──────────────╱              │
          │                         │ Y     S90            │
          ▼                         ▼                      │
   ┌─────────────────┐   ┌───────────────────────┐         │
   │ READ AND TRANSMIT│  │ SAVE RECEIVED INFORMATION│       │
   │   INFORMATION    │  └───────────────────────┘         │
   │        S91       │           │                        ▼
   └─────────────────┘           │           ┌──────────────────────┐
          │                      │           │ TRANSMIT NOTIFICATION │ S93
          ▼                      │           │   "NO INFORMATION"    │
   ┌─────────────────┐           │           └──────────────────────┘
   │REGISTER USE HISTORY│ S92    │                      │
   └─────────────────┘           │                      │
          │◄──────────────────────┘◄─────────────────────┘
          ▼
     ┌─────────┐
     │ RETURN  │
     └─────────┘
```

# FIG.30

GPS SERVER

4 POSITION NOTIFICATION REQUEST

POSITION NOTIFICATION

INFORMATION USE DEVICE (WATCH APPLICATION) 3

VIDEO INFORMATION

USE REQUEST

INFORMATION MANAGEMENT DEVICE 1

2a 2b 2c

POSITION NOTIFICATION

POSITION NOTIFICATION REQUEST

CHILD

TERMINAL EQUIPPED WITH GPS FUNCTION

EP 2 743 883 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05111077 B
- JP 2011002355 A
- JP 2005031955 A
- JP 2005321934 A
- US 2008243440 A1

**Non-patent literature cited in the description**

- **MICHAEL J. OCEAN et al.** *SNBENCH: Programming and Virtualization Framework for Distributed Multitasking Sensor Networks,* 14 June 2006, 89-99